# EUROPEAN PATENT APPLICATION

(11) **EP 4 668 004 A1**
(43) Date of publication of application: **24.12.2025**
(21) Application number: 24792313.9
(22) Date of filing: 26.01.2024
(51) Int. Cl.: G02F 1/1333, G02F 1/13, G02F 1/133

(54) **PHASE MODULATION MODULE, PHASE MODULATION DEVICE, AND METHOD FOR MANUFACTURING PHASE MODULATION MODULE**

(30) Priority: 21.04.2023 JP 2023069885
(71) Applicant: Hamamatsu Photonics K.K., Hamamatsu-shi, Shizuoka 435-8558 (JP)
(72) Inventor: NOZAWA Naoki, Hamamatsu-shi, Shizuoka 435-8558 (JP); NAGATA Mikio, Hamamatsu-shi, Shizuoka 435-8558 (JP); ASAINE Hirokazu, Hamamatsu-shi, Shizuoka 435-8558 (JP); TAKAHASHI Takumi, Hamamatsu-shi, Shizuoka 435-8558 (JP); AKIZAWA Yoshiki, Hamamatsu-shi, Shizuoka 435-8558 (JP); MURAMATSU Yuma, Hamamatsu-shi, Shizuoka 435-8558 (JP)
(74) Representative: Grünecker Patent- und Rechtsanwälte PartG mbB
(86) International application number: PCT/JP2024/002432
(87) International publication number: WO 2024/219037

(57) **Abstract**

A phase modulation module includes a heat sink, a housing portion that has a side wall portion formed in a frame shape and thermally connected to the heat sink, and a reflection-type phase modulation element and a filling material disposed inside the side wall portion. The phase modulation element includes a circuit board disposed on the heat sink, a liquid crystal layer disposed on a side opposite to the heat sink with respect to the circuit board, and a cover member formed of sapphire or diamond in a plate shape and disposed on a side opposite to the heat sink with respect to the liquid crystal layer. The filling material is in contact with at least a part of a peripheral edge portion of the cover member and the housing portion.

## Description

### Technical Field

One aspect of the present disclosure relates to a phase modulation module, a phase modulation device, and a method for manufacturing a phase modulation module.

### Background Art

Patent Literature 1 describes a phase modulation element in which a circuit layer, an electrode layer, a liquid crystal layer, a cover glass layer, and the like are formed on a silicon substrate. In this phase modulation element, the cover glass layer is formed of sapphire. As a result, heat generated in the electrode layer can be efficiently diffused.

### Citation List

### Patent Literature

Patent Literature 1: Japanese Unexamined Patent Publication No. 2020-109490

### Summary of Invention

### Technical Problem

For example, in a case where light having a high average light amount is modulated by a phase modulation element, there is a possibility that a change in characteristics or damage (for example, decomposition or carbonization of liquid crystal) accompanying a temperature rise may occur due to an increase in a heat generation amount, and it is required to further enhance light resistance. In addition, when a temperature rises, a plane shape of the phase modulation element changes, and there is a possibility that distortion to an extent that cannot be corrected occurs in a phase pattern input to the phase modulation element. In this respect, it is considered that the cover glass layer cannot sufficiently suppress them by simply forming the cover glass layer with sapphire as described in Patent Literature 1.

Therefore, an object of one aspect of the present disclosure is to provide a phase modulation module and a phase modulation device capable of enhancing light resistance and suppressing a change in plane shape in a phase modulation element, and a method for manufacturing such a phase modulation module.

### Solution to Problem

A phase modulation module according to one aspect of the present disclosure is [1] "a phase modulation module including: a heat sink; a housing portion that has a side wall portion formed in a frame shape when viewed from a predetermined direction, is disposed on the heat sink, and is thermally connected to the heat sink; a reflection-type phase modulation element at least a part of which is disposed inside the side wall portion when viewed from the predetermined direction; and a filling material disposed inside the side wall portion when viewed from the predetermined direction, in which the phase modulation element includes: a circuit board disposed on the heat sink, a liquid crystal layer disposed on a side opposite to the heat sink with respect to the circuit board, and a cover member formed of sapphire or diamond in a plate shape and disposed on a side opposite to the heat sink with respect to the liquid crystal layer, and the filling material is in contact with at least a part of a peripheral edge portion of the cover member and the housing portion".

In the phase modulation module, large heat may be generated in the vicinity of a center of the liquid crystal layer due to incidence of light. In this respect, in this phase modulation module, the cover member is formed of sapphire or diamond. As a result, a thermal conductivity of the cover member can be increased, and the heat generated in the vicinity of the center of the liquid crystal layer can be efficiently transferred to the peripheral edge portion of the cover member. In addition, in this phase modulation module, the filling material is disposed inside the side wall portion, and the filling material is in contact with at least a part of the peripheral edge portion of the cover member and the housing portion. As a result, the heat transferred to the peripheral edge portion of the cover member can be efficiently transferred to the housing portion. Further, in this phase modulation module, the housing portion is thermally connected to the heat sink. As a result, the heat transferred to the housing portion can be discharged to the heat sink. As described above, in this phase modulation module, an efficient heat dissipation path can be formed using the cover member and the filling material, and the temperature rise can be effectively suppressed. As a result, light resistance of the phase modulation element can be enhanced, and a change in plane shape in the phase modulation element can be suppressed.

The phase modulation module according to one aspect of the present disclosure may be [2] "the phase modulation module according to [1], in which the filling material is in contact with the peripheral edge portion on a side surface of the cover member". In this case, a contact area between the filling material and the cover member can be secured, and the heat can be efficiently transferred from the cover member to the housing portion.

The phase modulation module according to one aspect of the present disclosure may be [3] "the phase modulation module according to [1] or [2], in which the filling material is in contact with the peripheral edge portion on a surface of the cover member on a side opposite to the heat sink". In this case, the contact area between the filling material and the cover member can be secured, and the heat can be efficiently transferred from the cover member to the housing portion.

The phase modulation module according to one aspect of the present disclosure may be [4] "the phase modulation module according to any one of [1] to [3], in which the filling material is in contact with the peripheral edge portion on a surface of the cover member on the heat sink side". In this case, the contact area between the filling material and the cover member can be secured, and the heat can be efficiently transferred from the cover member to the housing portion.

The phase modulation module according to one aspect of the present disclosure may be [5] "the phase modulation module according to any one of [1] to [4], in which the filling material is in contact with a side surface of the cover member over an entire periphery". In this case, the contact area between the filling material and the cover member can be secured, and the heat can be efficiently transferred from the cover member to the housing portion. In addition, in this phase modulation module, the heat generated in the vicinity of the center of the liquid crystal layer is uniformly transferred toward the side surface of the cover member, such that the heat can be efficiently transferred from the cover member to the housing portion by bringing the filling material into contact with the side surface of the cover member over the entire periphery.

The phase modulation module according to one aspect of the present disclosure may be [6] "the phase modulation module according to any one of [1] to [5], in which the filling material is in contact with the side wall portion of the housing portion". In this case, the contact area between the filling material and the housing portion can be secured, and the heat can be efficiently transferred from the cover member to the housing portion.

The phase modulation module according to one aspect of the present disclosure may be [7] "the phase modulation module according to any one of [1] to [6], further including a wiring substrate disposed on the heat sink such that at least a part of the wiring substrate is located inside the side wall portion when viewed from the predetermined direction, in which the circuit board is disposed on the heat sink via the wiring substrate". In this case, for example, a fixing strength of the phase modulation element can be increased as compared with a case where the circuit board is directly disposed on the heat sink.

The phase modulation module according to one aspect of the present disclosure may be [8] "the phase modulation module according to any one of [1] to [6], in which the circuit board is directly disposed on the heat sink". In this case, for example, as compared with the case where the circuit board is disposed on the heat sink via the wiring substrate, heat generated in the phase modulation element can be efficiently discharged to the heat sink.

The phase modulation module according to one aspect of the present disclosure may be [9] "the phase modulation module according to any one of [1] to [8], in which the housing portion includes a top wall portion connected to the side wall portion, an opening that overlaps at least a part of the phase modulation element when viewed from the predetermined direction is formed in the top wall portion, and the filling material is in contact with a surface of the cover member on a side opposite to the heat sink and an inner surface of the top wall portion". In this case, since the filling material is disposed on the top wall portion side with respect to the phase modulation element, a strength of the phase modulation element against an impact from the top wall portion side can be increased. In addition, it is possible to suppress stray light, dust, and the like from entering an arrangement space of the phase modulation element. In addition, since the filling material remains around the opening during manufacturing, it is possible to suppress the filling material from flowing into an effective region of the cover member (region where incident light can be modulated).

The phase modulation module according to one aspect of the present disclosure may be [10] "the phase modulation module according to [9], in which a through-hole for filling the filling material into the housing portion is formed in the side wall portion or the top wall portion". In this case, even when the top wall portion is provided, the filling material can be easily filled into the housing portion during manufacturing.

The phase modulation module according to one aspect of the present disclosure may be [11] "the phase modulation module according to [9] or [10], in which the opening is located inside an outer edge of the cover member when viewed from the predetermined direction". In this case, it is possible to suppress occurrence of damage due to incidence of light incident from the opening on a region other than the effective region (for example, the circuit board, the wiring substrate, or the like).

The phase modulation module according to one aspect of the present disclosure may be [12] "the phase modulation module according to any one of [1] to [11], in which the housing portion includes a top wall portion connected to the side wall portion, an opening that overlaps at least a part of the phase modulation element when viewed from the predetermined direction is formed in the top wall portion, and a protruding portion protruding toward the cover member is formed on an inner surface of the top wall portion along an edge of the opening". In this case, it is possible to reliably suppress the filling material from flowing into the effective region of the cover member during manufacturing.

The phase modulation module according to one aspect of the present disclosure may be [13] "the phase modulation module according to [12], in which a gap is formed between the protruding portion and the cover member, and the filling material is not disposed in the gap". In this case, it is possible to reliably suppress the filling material from flowing into the effective region of the cover member during manufacturing. Further, it is possible to suppress the phase modulation element from being damaged by the protruding portion coming into contact with the cover member.

The phase modulation module according to one aspect of the present disclosure may be [14] "the phase modulation module according to [12], in which the filling material is disposed between the protruding portion and the cover member". In this case, the contact area between the filling material and the housing portion (top wall portion) can be increased, and heat dissipation performance can be improved. Further, it is possible to suppress the phase modulation element from being damaged by the protruding portion coming into contact with the cover member.

The phase modulation module according to one aspect of the present disclosure may be [15] "the phase modulation module according to any one of [1] to [14], in which an uneven structure is formed on an inner surface of the housing portion, and the filling material is in contact with the uneven structure". In this case, the contact area between the filling material and the housing portion can be increased, and heat dissipation performance can be improved.

The phase modulation module according to one aspect of the present disclosure may be [16] "the phase modulation module according to any one of [1] to [7] and [9] to [15], in which the housing portion includes a bottom wall portion connected to the side wall portion, and the bottom wall portion is disposed between the heat sink and the phase modulation element". In this case, a path through which heat is transferred from the housing portion to the heat sink can be sufficiently secured, and heat dissipation performance can be improved.

The phase modulation module according to one aspect of the present disclosure may be [17] "the phase modulation module according to any one of [1] to [16], in which the housing portion is formed of a metal material". In this case, a thermal conductivity of the housing portion can be increased, and the heat transferred from the filling material to the housing portion can be efficiently transferred to the heat sink.

The phase modulation module according to one aspect of the present disclosure may be [18] "the phase modulation module according to [16], further including a wiring substrate disposed on the heat sink such that at least a part of the wiring substrate is located inside the side wall portion when viewed from the predetermined direction, in which the circuit board is disposed on the heat sink via the wiring substrate, and the housing portion is formed of a metal material, the circuit board is formed of silicon, and the wiring substrate is formed of ceramic". In this case, since the ceramic has a linear expansion coefficient between the metal material and silicon, when the wiring substrate is disposed between the bottom wall portion and the circuit board, it is possible to suppress occurrence of warpage in the phase modulation element due to thermal expansion.

The phase modulation module according to one aspect of the present disclosure may be [19] "the phase modulation module according to any one of [1] to [18], in which a thermal conductivity of the filling material is 0.5 W/(m·K) or more". In this case, the heat of the cover member can be efficiently transferred to the housing portion.

The phase modulation module according to one aspect of the present disclosure may be [20] "the phase modulation module according to any one of [1] to [19], in which the cover member is formed in a rectangular plate shape, a shortest distance between a side surface of the cover member and the side wall portion is smaller than a length of a shortest side of the cover member when viewed from the predetermined direction, and the filling material is in contact with the side surface of the cover member and the side wall portion at a portion including a position where a distance between the side surface of the cover member and the side wall portion is the shortest distance". In this case, the distance between the cover member and the side wall portion can be shortened, and the heat of the cover member can be efficiently transferred to the housing portion via the filling material.

The phase modulation module according to one aspect of the present disclosure may be [21] "the phase modulation module according to any one of [1] to [20], in which a thickness of the cover member is 0.5 mm or more". In this case, it is possible to suppress the occurrence of distortion in the cover member due to thermal expansion.

The phase modulation module according to one aspect of the present disclosure may be [22] "the phase modulation module according to any one of [1] to [21], in which the cover member is formed of sapphire, and is disposed such that an inclination of a c-axis with respect to the predetermined direction is 0 degrees or more and 30 degrees or less". In this case, an influence of birefringence in the cover member can be suppressed.

A phase modulation device according to one aspect of the present disclosure is [23] "a phase modulation device including: the phase modulation module according to [22]; and a light source configured to output laser light, in which the laser light output from the light source is incident on the cover member such that an angle with respect to the c-axis is 58 degrees or less". In this phase modulation device, for the reasons described above, light resistance of the phase modulation element can be enhanced, and a change in plane shape in the phase modulation element can be suppressed. In addition, since the laser light output from the light source is incident on the cover member such that the angle with respect to the c-axis is 58 degrees or less, the laser light can be modulated while suppressing the influence of birefringence.

The phase modulation module according to one aspect of the present disclosure may be [24] "the phase modulation module according to any one of [1] to [22], further including a phase pattern control unit configured to control a phase pattern, the phase pattern control unit causing the phase modulation element to modulate a phase of incident light according to the phase pattern, in which the phase pattern control unit corrects the phase pattern based on a correction pattern for correcting an influence of birefringence in the cover member". In this case, the influence of birefringence in the cover member can be corrected in the phase modulation module.

The phase modulation module according to one aspect of the present disclosure may be [25] "the phase modulation module according to any one of [1] to [22] and [24], further including a phase pattern control unit configured to control a phase pattern, the phase pattern control unit causing the phase modulation element to modulate a phase of incident light according to the phase pattern, in which the phase pattern control unit corrects the phase pattern based on a correction pattern for correcting an influence of shape change of the phase modulation element due to a temperature". In this case, the influence of shape change of the phase modulation element due to the temperature can be corrected in the phase modulation module. That is, for example, when the cover member is formed of synthetic quartz, a thermal conductivity of the cover member is low, such that a temperature gradient may occur in the cover member. In this case, when an output distribution and a shape of the irradiated light are different, the shape of the phase modulation element is not uniquely determined even when a center temperature is the same, and it is difficult to correct the influence of shape change of the phase modulation element due to the temperature by the correction pattern. On the other hand, in this phase modulation module, since the thermal conductivity of the cover member is high and the generation of the temperature gradient is suppressed, the influence of shape change of the phase modulation element due to the temperature can be corrected by the correction pattern.

The phase modulation module according to one aspect of the present disclosure may be [26] "the phase modulation module according to any one of [1] to [22], [24], and [25], in which the filling material is gel-like or clay-like". In this case, for example, when the phase modulation element generates heat and expands during use, the filling material functions as a cushioning material, such that it is possible to suppress stress from acting on the phase modulation element. In addition, since the filling material hardly moves during use or manufacturing, handling can be facilitated.

A method for manufacturing a phase modulation module according to one aspect of the present disclosure is [27] "a method for manufacturing the phase modulation module according to any one of [1] to [22] and [24] to [26], the method including: a step of preparing a structure including the phase modulation element; a step of disposing the filling material at a predetermined position in at least a part of the housing portion; and a step of disposing the filling material between the phase modulation element and the housing portion by bringing at least the part of the housing portion close to the structure". According to this manufacturing method, it is possible to manufacture the phase modulation module capable of enhancing the light resistance of the phase modulation element and suppressing the change in plane shape in the phase modulation element as described above.

### Advantageous Effects of Invention

According to one aspect of the present disclosure, it is possible to provide a phase modulation module and a phase modulation device capable of enhancing light resistance and suppressing a change in plane shape in a phase modulation element, and a method for manufacturing such a phase modulation module.

### Brief Description of Drawings

FIG. 1 is a cross-sectional view of a phase modulation module according to an embodiment.
FIG. 2 is a plan view of the phase modulation module.
FIG. 3 is a cross-sectional view for describing a method for manufacturing the phase modulation module.
FIG. 4 is a cross-sectional view for describing the method for manufacturing the phase modulation module.
FIG. 5 is a configuration view of a phase modulation device of a first example.
FIG. 6 is a configuration view of a phase modulation device of a second example.
FIG. 7 is a view for describing control of a phase pattern.
FIG. 8 is a view for describing control of a phase pattern.
FIG. 9 is a view for describing control of a phase pattern.
FIG. 10 is a graph illustrating a result of a verification experiment.
FIG. 11 is a graph illustrating a relationship between a temperature and a plane shape of a cover member.
FIG. 12 is a cross-sectional view of a phase modulation module of a first modification.
FIG. 13 is a cross-sectional view of a phase modulation module of a second modification.
FIG. 14 is a cross-sectional view of a phase modulation module of a third modification.
FIG. 15 is a plan view of the phase modulation module of the third modification.
FIG. 16 is a cross-sectional view of a phase modulation module of a fourth modification.
FIG. 17 is a cross-sectional view of a phase modulation module of a fifth modification.
FIG. 18 is a cross-sectional view of a phase modulation module of a sixth modification.
FIG. 19 is a plan view of a phase modulation module of a seventh modification.

### Description of Embodiments

Hereinafter, an embodiment of the present disclosure will be described in detail with reference to the drawings. The following description will use the same reference numerals for the same or equivalent elements, and repeated descriptions will be omitted.

### [Phase Modulation Module]

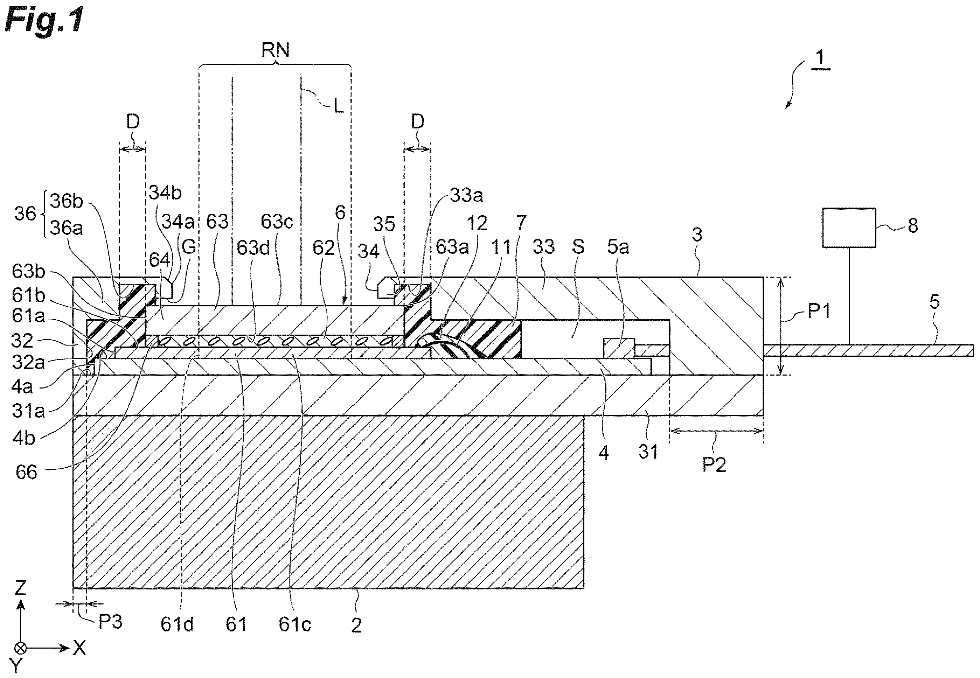

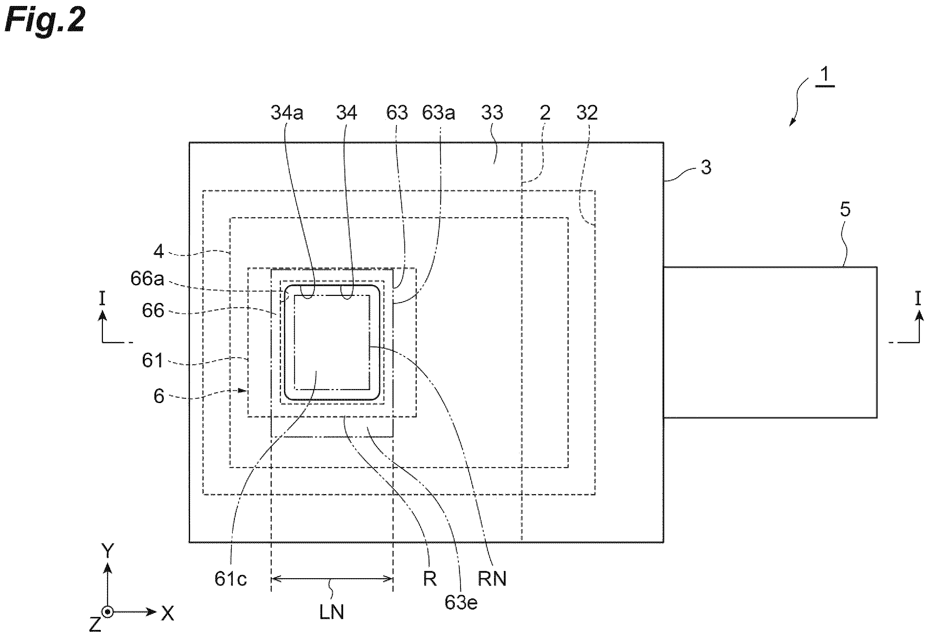

As illustrated in FIGS. 1 and 2, a phase modulation module 1 includes a heat sink 2, a housing portion 3, a first wiring substrate 4, a second wiring substrate 5, a phase modulation element 6, a filling material 7, and a control unit 8 (phase pattern control unit). The phase modulation element 6 includes a circuit board 61, a liquid crystal layer 62, and a cover member 63. In the phase modulation module 1, laser light L is incident on the phase modulation element 6 and reflected. At this time, a phase of the laser light L is modulated by the liquid crystal layer 62. In FIG. 1, an example of a region where the laser light L travels is indicated by a two-dot chain line. FIG. 1 illustrates a cross section taken along line I-I in FIG. 2. Hereinafter, a description will be given with reference to an X direction, a Y direction (direction perpendicular to the X direction), and a Z direction (direction perpendicular to the X direction and the Y direction) illustrated in FIGS. 1 and 2.

The heat sink 2 is a heat dissipation member formed of, for example, a metal material in a rectangular parallelepiped shape. In this example, the heat sink 2 is of a water-cooling type, and is cooled by causing a coolant to flow in a flow path formed inside. As an example, a temperature of the heat sink 2 during use is about 25°C. A thickness of the heat sink 2 in the Z direction is larger than a thickness of the phase modulation element 6 in the Z direction.

The housing portion 3 defines an arrangement space S (accommodation space) in which the phase modulation element 6 is disposed. The housing portion 3 is formed of, for example, a metal material such as aluminum. The housing portion 3 includes a bottom wall portion 31, a side wall portion 32, and a top wall portion 33. In this example, the side wall portion 32 and the top wall portion 33 are integrally formed (as one member), but for example, the side wall portion 32 and the top wall portion 33 may be formed separately (as a separate member), and integrated by, for example, adhesion, welding, screwing, or the like. In this example, the bottom wall portion 31 and the side wall portion 32 are formed separately, but for example, the bottom wall portion 31 and the side wall portion 32 may be integrally formed (as one member).

The bottom wall portion 31 is formed in a rectangular plate shape. The bottom wall portion 31 is directly disposed on the heat sink 2 and is thermally connected to the heat sink 2. In this example, a portion of the bottom wall portion 31 on one side in the X direction (left side in FIGS. 1 and 2) is in contact with the heat sink 2, and a portion of the bottom wall portion 31 on the other side in the X direction is not in contact with the heat sink 2. "The bottom wall portion (housing portion) is thermally connected to the heat sink" means that the bottom wall portion is directly in contact with the heat sink or is connected to the heat sink via a non-thermally insulating element (in other words, is not insulated from the heat sink by a thermally insulating element). The thermally insulating element has a thermal conductivity of, for example, less than 0.01 W/(m·K) and the non-thermally insulating element has a thermal conductivity of, for example, 0.01 W/(m·K) or more. Examples of the thermally insulating element include air, and examples of non-thermally insulating element include a ceramic member.

The side wall portion 32 is formed in a rectangular frame shape in plan view (when viewed from the Z direction (predetermined direction)), and extends from the bottom wall portion 31 along the Z direction. The top wall portion 33 is formed in a rectangular plate shape and faces the bottom wall portion 31 in the Z direction. The bottom wall portion 31 and the top wall portion 33 extend parallel to each other and perpendicular to the Z direction. The bottom wall portion 31 and the top wall portion 33 are connected to the side wall portion 32. In this example, the arrangement space S (internal space) in which the phase modulation element 6 is disposed is defined by the bottom wall portion 31, the side wall portion 32, and the top wall portion 33.

A thickness (length from the contact surface with the bottom wall portion 31 to the surface of the top wall portion 33 on a side opposite to the heat sink 2) of the side wall portion 32 in the Z direction is larger than a thickness of the bottom wall portion 31. A thickness of a thickest portion of the side wall portion 32 in a direction along an XY plane (direction perpendicular to the Z direction) may be thicker than a thickness of the cover member 63. A thickness of a thinnest portion of the side wall portion 32 in the direction along the XY plane may be thinner than the thickness of the cover member 63. It is sufficient that the side wall portion 32 is formed in a frame shape, and for example, a notch or a through-hole may be partially formed. For example, a part of a bottom surface (surface on the heat sink 2 side) of the side wall portion 32 may be in contact with the bottom wall portion 31 or the heat sink 2. The top wall portion 33 may include a portion thinner than the bottom wall portion 31.

An opening 34 through which the laser light L incident on the phase modulation element 6 and the laser light L reflected by the phase modulation element 6 pass is formed in the top wall portion 33. The opening 34 has a shape elongated in the Y direction. An edge 34a of the opening 34 is formed to have a smooth corner (so as not to have a sharp corner). As illustrated in FIG. 2, the opening 34 is formed in, for example, a substantially rectangular shape. In plan view, the opening 34 overlaps a portion on a central side of the phase modulation element 6 and does not overlap a portion on an outer edge side of the phase modulation element 6. In this example, the entire opening 34 is located inside an outer edge 63a of the cover member 63 in plan view.

A protruding portion 35 (barbed portion) is formed on an inner surface 33a (surface on the phase modulation element 6 side) of the top wall portion 33. The protruding portion 35 is formed over an entire periphery along the edge 34a of the opening 34. That is, the protruding portion 35 surrounds the opening 34 in plan view. In this example, the protruding portion 35 is formed in a rectangular annular shape in plan view. The protruding portion 35 extends from the inner surface 33a in parallel with the Z direction and protrudes toward the cover member 63 of the phase modulation element 6. A gap G is formed between the protruding portion 35 and the cover member 63. A width of the gap G in the Z direction may be smaller than the thickness of the cover member 63. An inclined surface 34b inclined so as to spread toward the outside of the housing portion 3 is formed at the edge 34a of the opening 34. Since the inclined surface 34b is formed, it is possible to suppress the laser light L obliquely incident on the cover member 63 from interfering with the edge 34a. In this case, restriction on an incident angle can be relaxed.

An uneven structure 36 is formed on an inner surface of the housing portion 3. In this example, as the uneven structure 36, a protrusion 36a is formed at a boundary portion between an inner surface 32a (surface on the phase modulation element 6 side) of the side wall portion 32 and the inner surface 33a of the top wall portion 33. The protrusion 36a is formed in, for example, a rectangular annular shape so as to surround the opening 34 in plan view. The protrusion 36a has a rectangular shape in a cross section perpendicular to an extending direction (which is an extending direction in plan view, and is the X direction or the Y direction in this example). As illustrated in FIG. 1, the protrusion 36a faces the cover member 63 (phase modulation element 6) in the X direction. The uneven structure 36 may be formed so as not to interfere with an electronic component and the like provided on the first wiring substrate 4 described later.

In addition, in this example, since the protrusion 36a is formed, a groove 36b (recessed portion) is formed between the protrusion 36a and the protruding portion 35. The groove 36b also constitutes the uneven structure 36. The groove 36b is formed in a rectangular annular shape so as to surround the opening 34 in plan view. The groove 36b has a rectangular shape in a cross section perpendicular to an extending direction (which is an extending direction in plan view, and is the X direction or the Y direction in this example).

The first wiring substrate 4 is a rectangular plate-shaped ceramic substrate formed of, for example, ceramic (aluminum nitride), and is disposed in the arrangement space S defined by the housing portion 3. A predetermined wiring, an electronic component, and the like may be provided on the first wiring substrate 4. The first wiring substrate 4 is directly disposed on the bottom wall portion 31, and is disposed on the heat sink 2 via the bottom wall portion 31. In this example, the first wiring substrate 4 is disposed on the bottom wall portion 31 via, for example, an adhesive, a double-sided tape, or the like. As described above, "a member A is directly disposed on a member B" includes a case where an element for fixing is disposed between the members A and B (in this case, the first wiring substrate 4 and the bottom wall portion 31). In this example, the entire first wiring substrate 4 is disposed inside the side wall portion 32 in plan view. A predetermined wiring may be provided on the first wiring substrate 4 or inside the first wiring substrate 4. For example, an electronic component such as a temperature monitoring element (thermistor) for measuring a temperature of the phase modulation element 6 may be provided on the first wiring substrate 4. The uneven structure 36 described above may prevent the side wall portion 32 or the top wall portion 33 from interfering with the electronic component provided on the first wiring substrate 4.

The second wiring substrate 5 is, for example, a flexible circuit board having flexibility, and is electrically connected to the first wiring substrate 4 via a connection portion 5a. More specifically, the second wiring substrate 5 is connected to a portion of the first wiring substrate 4 on one side in the X direction (right side in FIGS. 1 and 2) in the arrangement space S. A predetermined wiring, an electronic component, and the like may be provided on the second wiring substrate 5. A predetermined wiring may be provided on the second wiring substrate 5 or inside the second wiring substrate 5. An electronic component and the like may be provided on the second wiring substrate 5. The second wiring substrate 5 is drawn out of the arrangement space S via, for example, a notch (not illustrated) formed in the side wall portion 32.

The phase modulation element 6 is disposed in the arrangement space S defined by the housing portion 3, and the entire phase modulation element 6 is located inside the side wall portion 32 in plan view. In the phase modulation element 6, the circuit board 61, the liquid crystal layer 62, and the cover member 63 are laminated in this order in the Z direction. That is, the liquid crystal layer 62 is formed on the circuit board 61, and the cover member 63 is formed on the liquid crystal layer 62. The phase modulation element 6 is a reflection-type spatial light modulator. In this example, the phase modulation element 6 is an LCOS-SLM (liquid crystal on silicon-spatial light modulator).

For example, the laser light L is incident on the phase modulation element 6 from the cover member 63 side along the Z direction (thickness direction of the phase modulation element 6). The laser light L incident from the cover member 63 is incident on the liquid crystal layer 62, and the phase of the laser light L is modulated when traveling in the liquid crystal layer 62. More specifically, an inclination of liquid crystal molecules in the liquid crystal layer 62 is controlled for each pixel by a voltage applied from the circuit board 61, and the phase of the laser light L incident on each pixel is controlled by changing a refractive index of the liquid crystal. A phase pattern representing a modulation amount of the phase in each pixel is controlled by the control unit 8 (phase pattern control unit). The control unit 8 is, for example, a controller electrically connected to the second wiring substrate 5, and controls the phase pattern based on a signal received from an external PC. The laser light L incident on the liquid crystal layer 62 is reflected by the circuit board 61.

The circuit board 61 is a rectangular plate-shaped CMOS chip formed of, for example, silicon. For example, pixel electrodes are twodimensionally disposed on the CMOS chip. The circuit board 61 is directly disposed on the first wiring substrate 4, and is disposed on the heat sink 2 via the first wiring substrate 4 and the bottom wall portion 31. The circuit board 61 is electrically connected to the first wiring substrate 4 by, for example, a wire 11, and is communicably connected to the control unit 8 via the first wiring substrate 4 and the second wiring substrate 5. The circuit board 61 protrudes from the cover member 63 on both sides in a short side direction of the cover member 63 with respect to the cover member 63 having a rectangular shape in plan view. The wire 11 is connected to the protruding portion of the circuit board 61.

The wire 11 is covered with a protective material 12 made of, for example, a resin material. The protective material 12 is, for example, liquid rubber, and may be a rubber or a resin having a higher viscosity than the filling material 7. The protective material 12 may be formed of a curable resin that is not gel-like or putty-like. Since the protective material 12 is provided, the wire 11 can be reliably protected from the filling material 7. The circuit board 61 has an effective pixel region 61c capable of controlling the liquid crystal layer 62 by application of a voltage at a central portion in plan view. The effective pixel region 61c is, for example, a rectangular region having 1280 × 1024 pixels. A thickness of the CMOS chip constituting the circuit board 61 may be thinner than the thickness of the cover member 63.

The liquid crystal layer 62 is formed on the circuit board 61 disposed on the heat sink 2. That is, the liquid crystal layer 62 is disposed on the side (upper side in FIG. 1) opposite to the heat sink 2 with respect to the circuit board 61. The cover member 63 is formed on the liquid crystal layer 62 so as to cover the entire liquid crystal layer 62. That is, the cover member 63 is disposed on the side (upper side in FIG. 1) opposite to the heat sink 2 with respect to the liquid crystal layer 62. A thickness of the liquid crystal layer 62 may be thinner than the thickness of the cover member 63. A sealing resin 66 having a rectangular frame shape in plan view is provided around the liquid crystal layer 62, and the periphery of the liquid crystal layer 62 is sealed by the sealing resin 66. The sealing resin 66 is formed of, for example, a UV curable resin, and is joined to the circuit board 61 and the cover member 63.

In this example, the cover member 63 is a rectangular plate-shaped sapphire substrate formed of sapphire. The cover member 63 has transmittance to the laser light L and functions as a light incident portion in the phase modulation element 6. The cover member 63 also functions as a reference potential in voltage application by the circuit board 61. A size of the cover member 63 in plan view is, for example, about 25 mm × 18 mm. The thickness (length in the Z direction) of the cover member 63 is 0.5 mm or more, for example, 3 mm. That is, the cover member 63 is formed in a rectangular shape in plan view, and has a long side direction and a short side direction. In the present embodiment, the cover member 63 is disposed such that the long side direction is parallel to the Y direction. The thickness of the cover member 63 may be larger than the thickness of each of the circuit board 61, the liquid crystal layer 62, the first wiring substrate 4, the second wiring substrate 5, and the bottom wall portion 31. When the cover member 63 is a sapphire substrate, it has a hexagonal crystal structure. The cover member 63 is disposed such that the inclination of the c-axis with respect to the Z direction is 0 degrees or more and 30 degrees or less. Although not illustrated in FIG. 1, a transparent electrode made of, for example, ITO (indium tin oxide) is disposed between the liquid crystal layer 62 and the cover member 63.

In this example, the cover member 63 has a protruding portion 63e protruding to one side in the Y direction with respect to the circuit board 61 and the liquid crystal layer 62 when viewed from the Z direction. Wiring (for example, a wire) for applying a reference voltage to a transparent electrode film made of ITO and formed on the surface of the cover member 63 on the heat sink 2 side is connected to the surface of the protruding portion 63e on the heat sink 2 side (second surface 63d to be described later). By protruding the cover member 63 in the Y direction with respect to the circuit board 61 and the liquid crystal layer 62, it is possible to prevent the wire 11 connected to the circuit board 61 from interfering with the cover member 63 and the wiring for applying the reference voltage connected to the surface of the cover member 63 on the heat sink 2 side.

The filling material 7 is disposed in the arrangement space S defined by the housing portion 3, and the entire filling material 7 is located inside the side wall portion 32 in plan view. The filling material 7 is in contact with at least a part of the peripheral edge portion 64 of the cover member 63 and the housing portion 3. The peripheral edge portion 64 is a rectangular annular portion in plan view along the outer edge 63a of the cover member 63. The peripheral edge portion 64 is a portion of the cover member 63 located outside an effective region RN in plan view (a non-effective region portion outside the effective region RN). The laser light L incident on the cover member 63 in the effective region RN can be modulated by the phase modulation element 6. The effective region RN is defined by an outer edge of the effective pixel region 61c of the circuit board 61, an inner edge 66a of the sealing resin 66, or the edge 34a of the opening 34, which is located on the innermost side (center side of the phase modulation element 6) in plan view. In this example, since the outer edge of the effective pixel region 61c is located inside the inner edge 66a of the sealing resin 66 and the edge 34a of the opening 34 in plan view, the effective region RN is defined by the outer edge of the effective pixel region 61c. That is, in this example, the effective region RN is a region overlapping the effective pixel region 61c in plan view.

In this example, the filling material 7 is in contact with the peripheral edge portion 64 on a side surface 63b of the cover member 63. The filling material 7 is in contact with the entire side surface 63b in the Z direction. In addition, the filling material 7 is in contact with the side surface 63b over the entire periphery in plan view. The side surface 63b is a surface connected to a first surface 63c (surface on the side opposite to the heat sink 2, which is an upper surface in FIG. 1) and the second surface 63d (surface on the heat sink 2 side) of the cover member 63. The filling material 7 is also in contact with the peripheral edge portion 64 at an outer edge portion (portion along the outer edge 63a) of the first surface 63c. The filling material 7 is not disposed (does not enter) in the gap G formed between the protruding portion 35 of the housing portion 3 and the cover member 63 (first surface 63c). In this example, the filling material 7 is in contact with the second surface 63d of the protruding portion 63e of the cover member 63. The second surface 63d of the portion of the cover member 63 other than the protruding portion 63e is in contact with the liquid crystal layer 62 or the sealing resin 66 and is not in contact with the filling material 7. The sealing resin 66 can also be regarded as a part of the liquid crystal layer 62.

In this example, the filling material 7 is in contact with the bottom wall portion 31, the side wall portion 32, and the top wall portion 33 of the housing portion 3. More specifically, the filling material 7 is in contact with an exposed portion 31a of the bottom wall portion 31 that is exposed from the first wiring substrate 4. The filling material 7 is in contact with the inner surface 32a of the side wall portion 32. The filling material 7 is in contact with the entire inner surface 32a in the Z direction on one side in the X direction (left side in FIG. 1), and is not in contact with the inner surface 32a on the other side in the X direction. That is, there is a portion where the filling material 7 is not disposed in the arrangement space S of the housing portion 3. By securing the arrangement space S to be large with respect to the amount of the filling material 7 in this manner (by providing the arrangement space S with a margin), it is possible to reduce the risk that the filling material 7 reaches the effective region RN on the first surface 63c of the cover member 63. The filling material 7 is in contact with the inner surface 33a of the top wall portion 33. The filling material 7 is in contact with an outer surface of the protrusion 36a constituting the uneven structure 36. In addition, the filling material 7 is in contact with the inner surfaces (the bottom surface and the side surface) of the groove 36b constituting the uneven structure 36. The outer surface of the protrusion 36a constitutes the inner surface 32a of the side wall portion 32, and the bottom surface of the groove 36b constitutes the inner surface 33a of the top wall portion 33.

In this manner, the filling material 7 is in contact with the side surface 63b of the cover member 63 and the side wall portion 32 of the housing portion 3. In this example, the filling material 7 is in contact with the side surface 63b and the side wall portion 32 at a portion including a position where a distance between the side surface 63b and the side wall portion 32 is the shortest. FIG. 1 illustrates a shortest distance D between the side surface 63b and the side wall portion 32. As described above, in this example, the distance between the side surface 63b and the side wall portion 32 is the shortest at the position where the side surface 63b and the protrusion 36a face each other. In plan view, the shortest distance D is shorter than a length LN (FIG. 2) of a shortest side R of the cover member 63.

In addition to the cover member 63 and the housing portion 3, the filling material 7 is in contact with the side surface 62a of the liquid crystal layer 62, a side surface 61a and a surface 61b of the circuit board 61 (surface on the side opposite to the heat sink 2), a side surface 4a and a surface 4b of the first wiring substrate 4 (surface on the side opposite to the heat sink 2), and the protective material 12. The filling material 7 is not in contact with the connection portion 5a between the first wiring substrate 4 and the second wiring substrate 5. Accordingly, the electrical connection between the first wiring substrate 4 and the second wiring substrate 5 in the connection portion 5a can be secured.

The filling material 7 is made of a potting material having a high viscosity. The filling material 7 is formed of, for example, a resin material such as silicone. The filling material 7 may be, for example, a non-silicone-based resin material, a silver paste, a heat dissipation adhesive, a liquid rubber, or the like. A thermal conductivity of the filling material 7 is 0.5 W/(m·K) or more, for example, about 5.0 W/(m·K). The filling material 7 is gel-like or clay-like (putty-like) and is not cured. The filling material 7 has a flow rate of, for example, 10 g/min or more and 60 g/min or less. This flow rate is a measurement value of how many grams of flow rate per minute are obtained when a sample is extruded at a pressure of 0.6 MPa using a syringe having a diameter of 2.54 mm and a capacity of 30cc, and the smaller the flow rate, the higher the viscosity. The filling material 7 has, for example, a viscosity of 100 to 15000 Pa·s.

Hereinafter, an example of dimensions of each part will be described. A thickness of the heat sink 2 in the Z direction is 18 mm, and the width of the heat sink 2 in the X direction is 47 mm. A thickness of the bottom wall portion 31 in the Z direction is 3 mm, and the width of the bottom wall portion 31 in the X direction is 56 mm. A thickness (height) (P1 in FIG. 1) of the side wall portion 32 in the Z direction is 7 mm. A width in the X direction (P2 in FIG. 1) of a portion of the side wall portion 32 on one side in the X direction (right side in FIG. 1) is 7 mm, and a width in the X direction (P3 in FIG. 1) of a portion of the side wall portion 32 on one side in the X direction (left side in FIG. 1) is 1 mm. A thickness of the top wall portion 33 in the Z direction is 3 mm. A width in the X direction (width of one side) of a portion of the top wall portion 33 overlapping the cover member 63 in the Z direction is 1.8 mm, and a width in the Y direction (width of one side) (maximum width) of the portion is 4.5 mm. A width of the opening 34 in the X direction is 14.4 mm, and a width of the opening 34 in the Y direction is 18 mm. A width (width of one side) of the protruding portion 35 in the X direction is 1 mm. A width of the gap G in the Z direction (distance between the protruding portion 35 and the first surface 63c of the cover member 63) is 0.5 to 1 mm. A width (width of one side) of the sealing resin 66 in the X direction is 1 mm. A thickness of the circuit board 61 in the Z direction is about 0.7 mm. A width of the effective pixel region 61c of the circuit board 61 in the X direction is 12.8 mm and a width thereof in the Y direction is 16 mm.

### [Method for Manufacturing Phase Modulation Module]

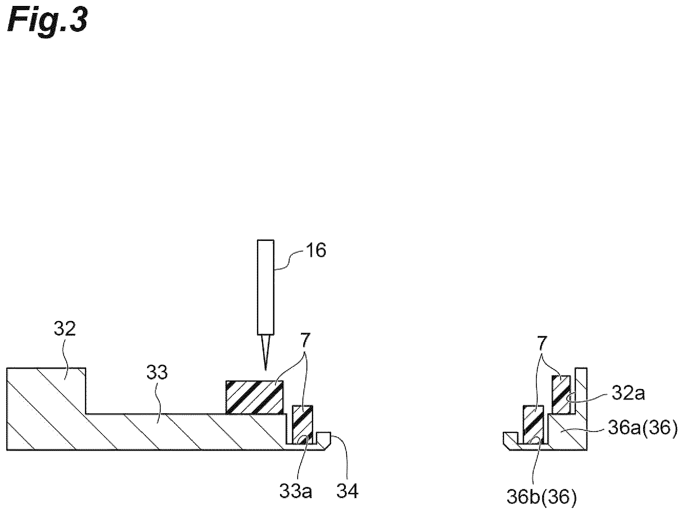

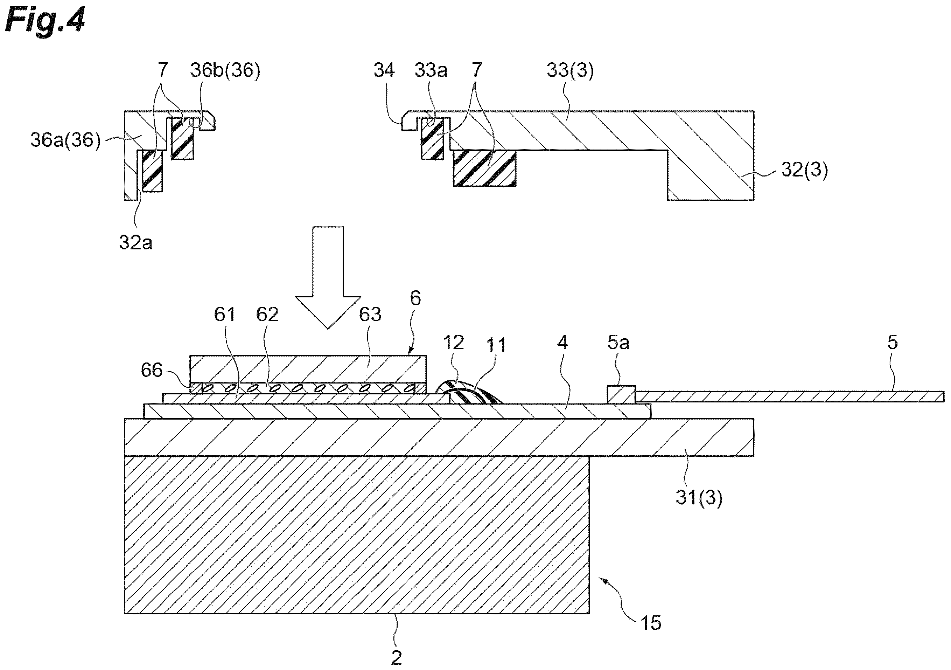

A method for manufacturing the phase modulation module 1 according to the embodiment will be described with reference to FIGS. 3 and 4. First, a structure 15 in which the bottom wall portion 31 of the housing portion 3, the first wiring substrate 4, the second wiring substrate 5, and the phase modulation element 6 are disposed on the heat sink 2 is prepared (preparation step) (FIG. 4). The structure 15 corresponds to a configuration excluding the side wall portion 32 and the top wall portion 33 of the housing portion 3 and the filling material 7 in the phase modulation module 1 described above, and is assembled in advance in the preparation step, for example.

Subsequently, the filling material 7 is disposed at predetermined positions in the side wall portion 32 and the top wall portion 33 (at least a part of the housing portion 3) (first arrangement step) (FIG. 3). As illustrated in FIG. 3, in the first arrangement step, the filling material 7 is applied onto the side wall portion 32 and the top wall portion 33 disposed such that the inner surface 33a of the top wall portion 33 faces vertically upward, for example, using a dispenser 16 that discharges the filling material 7. In this example, the filling material 7 is applied to predetermined positions on the inner surface 32a of the side wall portion 32 and the inner surface 33a of the top wall portion 33.

After the preparation step and the first arrangement step, the filling material 7 is disposed between the phase modulation element 6 and the housing portion 3 by bringing the side wall portion 32 and the top wall portion 33 close to the structure 15 (second arrangement step) (FIG. 4). In the second arrangement step, the filling material 7 is sealed in the housing portion 3 by covering the side wall portion 32 and the top wall portion 33 to which the filling material 7 is applied on the assembled structure 15. In the second arrangement step, the side wall portion 32 and the top wall portion 33 are brought close to the structure 15 in a state where the inner surface 33a of the top wall portion 33 faces vertically lower, and the side wall portion 32 comes into contact with the bottom wall portion 31. After the contact, the bottom wall portion 31 and the side wall portion 32 are fixed to each other. Through the above steps, the phase modulation module 1 is manufactured. Note that the order of the preparation step and the first arrangement step is not limited, and either one may be performed first or may be performed in parallel.

In the above embodiment, the phase modulation element 6 and the like are disposed on the heat sink 2 in the structure 15 prepared in the preparation step, but the heat sink 2 may be attached after the second arrangement step. That is, in the preparation step, the structure 15 in which the first wiring substrate 4, the second wiring substrate 5, and the phase modulation element 6 are disposed on the bottom wall portion 31 of the housing portion 3 may be prepared, and after the bottom wall portion 31 and the side wall portion 32 are fixed to each other in the second arrangement step, the heat sink 2 may be fixed to the bottom wall portion 31. In the examples of FIGS. 3 and 4, the filling material 7 is not in contact with the inner surface 32a of the side wall portion 32, but by bringing the side wall portion 32 and the top wall portion 33 close to the structure 15, the filling material 7 enters so as to fill the gap, and the filling material 7 comes into contact with the inner surface 32a of the side wall portion 32 (state illustrated in FIG. 1). In the first arrangement step, the filling material 7 may be in contact with the inner surface 32a in advance. When the bottom wall portion 31 and the side wall portion 32 are integrally formed (by the same member) and the side wall portion 32 and the top wall portion 33 are separately formed, the filling material 7 may be applied to the top wall portion 33, and the top wall portion 33 to which the filling material 7 is applied may be fixed by being brought close to the bottom wall portion 31 and the side wall portion 32. As described later, after the bottom wall portion 31, the side wall portion 32, and the top wall portion 33 are fixed, the filling material 7 may be injected into the arrangement space S from a through-hole formed in the side wall portion 32 or the top wall portion 33.

### [Phase Modulation Device]

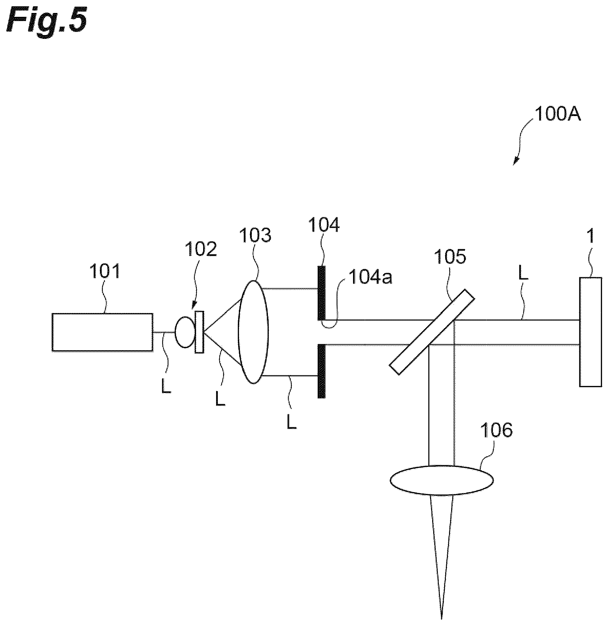

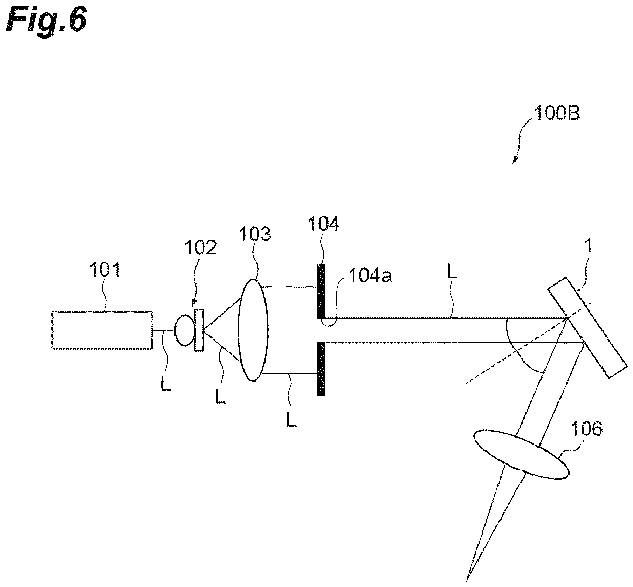

An example of a phase modulation device using the phase modulation module 1 will be described with reference to FIGS. 5 and 6. FIG. 5 illustrates a phase modulation device 100A of a first example, and FIG. 6 illustrates a phase modulation device 100B of a second example.

As illustrated in FIG. 5, in addition to the phase modulation module 1, the phase modulation device 100A includes a light source 101, a special filter 102, a collimator lens 103, an aperture member 104, a half mirror 105, and a Fourier transform lens 106.

The light source 101 outputs the laser light L. The laser light L output from the light source 101 is transmitted through the special filter 102, is then collimated by the collimator lens 103, and incident on the aperture member 104. A part of the laser light L incident on the aperture member 104 passes through an aperture 104a formed in the aperture member 104 and is incident on the half mirror 105. A diameter of the laser light L after passing through the aperture member 104 is about 6 mm. A part (half) of the laser light L incident on the half mirror 105 is transmitted through the half mirror 105, is incident on the phase modulation module 1, and is reflected. At this time, the phase of the laser light L is modulated by the phase modulation module 1. In the phase modulation device 100A, the laser light L is incident on the phase modulation module 1 (cover member 63) perpendicularly (parallel to the Z direction). In addition, the laser light L is incident on the cover member 63 such that the angle with respect to the c-axis is 58 degrees or less. The output of the laser light L incident on the phase modulation module 1 is, for example, about 200 W to 500 W. The special filter 102 may be omitted.

The laser light L modulated by the phase modulation module 1 is incident on the half mirror 105 again. A part (half) of the laser light L incident on the half mirror 105 is reflected by the half mirror 105 and is incident on the Fourier transform lens 106. The laser light L transmitted through the Fourier transform lens 106 becomes output light of the phase modulation device 100A. As described above, in the phase modulation device 100A, since the laser light L output from the light source 101 is divided by the half mirror 105 twice in total and becomes the output light, the light amount of the output light is 25% of the light amount of the laser light L having passed through the aperture 104a.

As illustrated in FIG. 6, in addition to the phase modulation module 1, the phase modulation device 100B includes the light source 101, the special filter 102, the collimator lens 103, the aperture member 104, and the Fourier transform lens 106. In the phase modulation device 100B, the half mirror 105 is not provided, and all the light having passed through the aperture 104a is incident on the phase modulation module 1. In the phase modulation device 100B, the laser light L is obliquely (obliquely with respect to the Z direction) incident on the phase modulation module 1 (cover member 63). Also in the phase modulation device 100B, the laser light L is incident on the cover member 63 such that the angle with respect to the c-axis is 58 degrees or less. In the phase modulation device 100B, the light amount of the output light is 100% of the light amount of the laser light L having passed through the aperture 104a.

### [Control of Phase Pattern]

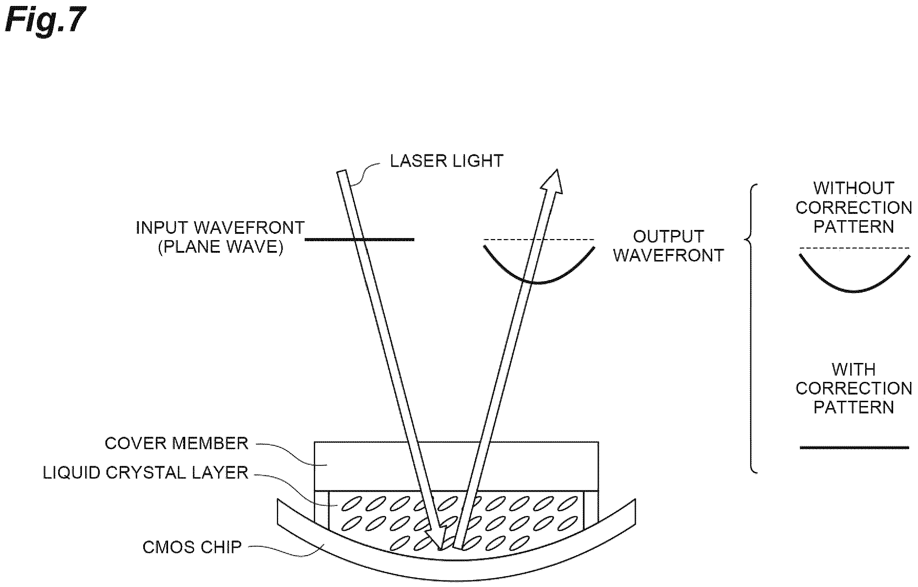

The control of the phase pattern in the phase modulation module 1 will be described with reference to FIGS. 7 to 9. As illustrated in FIG. 7, in the phase modulation element 6, initial distortion may exist in the shape during manufacturing. In this case, even when an input wavefront is a plane wave, an output wavefront is curved. Therefore, the phase pattern is corrected using a distortion correction pattern for correcting an influence of such initial distortion. That is, when a phase pattern corresponding to modulation desired to be added to the laser light L is a modulation phase pattern, the control unit 8 inputs a phase pattern obtained by superimposing the distortion correction pattern on the modulation phase pattern to the phase modulation element 6. This makes it possible to obtain a reflected image in which the influence of the initial distortion is reduced.

In addition, in the phase modulation module 1 according to the embodiment, the control unit 8 corrects the phase pattern further based on a birefringence correction pattern for correcting an influence of birefringence in the cover member 63. That is, the control unit 8 inputs a phase pattern obtained by superimposing the distortion correction pattern and the birefringence correction pattern on the modulation phase pattern to the phase modulation element 6. This makes it possible to obtain a reflected image in which the influence of birefringence is reduced. The birefringence correction pattern is set based on the inclination of the c-axis of the cover member 63 with respect to the Z direction and the incident angle of the laser light L with respect to the c-axis of the cover member 63. As described above, in the phase modulation module 1, the inclination of the c-axis of the cover member 63 with respect to the Z direction is 0 degrees or more and 30 degrees or less, and in the phase modulation devices 100A and 100B, the incident angle of the laser light L with respect to the c-axis of the cover member 63 is 58 degrees or less.

In addition, in the phase modulation module 1 according to the embodiment, the control unit 8 corrects the phase pattern further based on a temperature correction pattern for correcting an influence of shape change of the phase modulation element 6 (circuit board 61, liquid crystal layer 62, and cover member 63) due to the temperature. That is, the control unit 8 inputs a phase pattern in which the distortion correction pattern, the birefringence correction pattern, and the temperature correction pattern are superimposed on the modulation phase pattern to the phase modulation element 6. As a result, it is possible to obtain a reflected image in which the influence of shape change of the phase modulation element 6 due to the temperature is reduced. The temperature correction pattern is set based on the temperature of the phase modulation module 1. As described above, a temperature monitoring element (thermistor or the like) for measuring (monitoring) the temperature of the phase modulation element 6 can be disposed on the first wiring substrate 4. From the viewpoint of accurately reflecting the temperature of the phase modulation element 6, it is preferable to dispose the temperature monitoring element as close as possible to the phase modulation element 6 inside the side wall portion 32 in plan view.

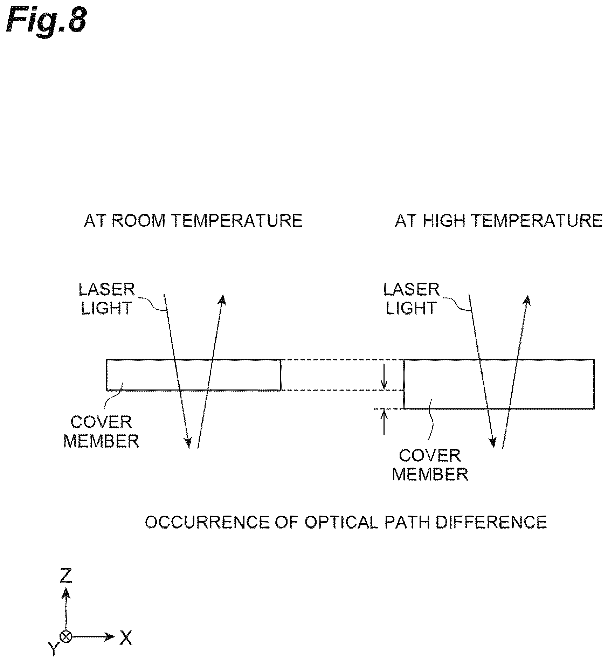

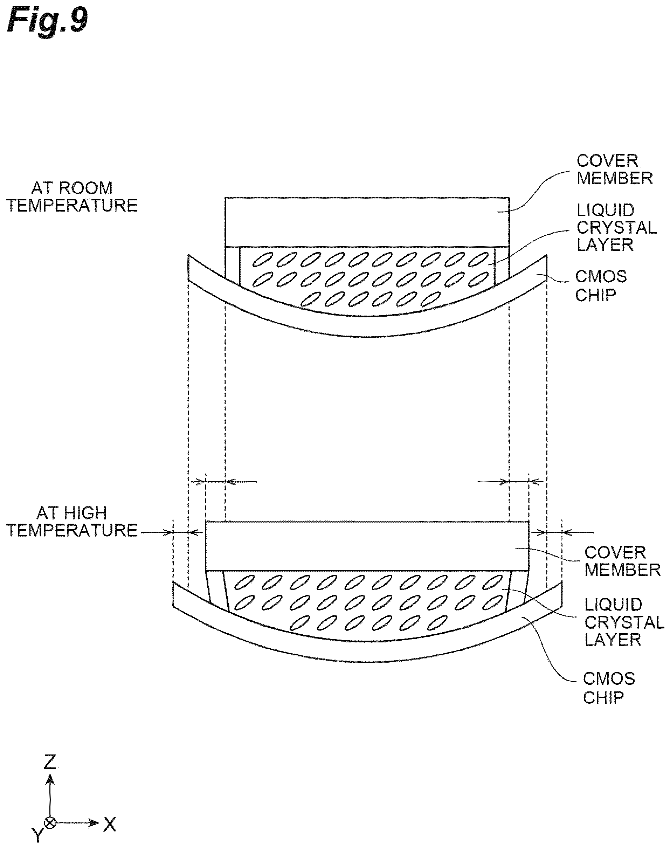

This point will be further described with reference to FIGS. 8 and 9. As illustrated in FIG. 8, when a temperature rises from a room temperature to a higher temperature, the cover member expands in the Z direction, which may cause an optical path difference. In addition, as illustrated in FIG. 9, when a temperature rises from a room temperature to a higher temperature, the cover member expands in the X direction and the Y direction, which may cause distortion in the output wavefront. Therefore, in the phase modulation module 1 according to the embodiment, the phase pattern is corrected by the above-described temperature correction pattern. As a result, it is possible to obtain a reflected image in which the influence of shape change of the phase modulation element 6 due to the temperature is reduced. Note that at least one of the distortion correction pattern, the birefringence correction pattern, and the temperature correction pattern may not be superimposed. For example, one of the birefringence correction pattern and the temperature correction pattern may not be superimposed.

### [Function and Effects]

In the phase modulation module 1, large heat can be generated in the vicinity of the center of the liquid crystal layer 62 by the incidence of the laser light L. In this regard, in the phase modulation module 1, the cover member 63 is formed of sapphire. As a result, a thermal conductivity of the cover member 63 can be increased, and the heat generated in the vicinity of the center of the liquid crystal layer 62 can be efficiently transferred to the peripheral edge portion 64 of the cover member 63. In addition, in the phase modulation module 1, the filling material 7 is disposed inside the side wall portion 32, and the filling material 7 is in contact with at least a part of the peripheral edge portion 64 of the cover member 63 and the housing portion 3. As a result, the heat transferred to the peripheral edge portion 64 of the cover member 63 can be efficiently transferred to the housing portion 3. Further, in the phase modulation module 1, the housing portion 3 is thermally connected to the heat sink 2. As a result, the heat transferred to the housing portion 3 can be discharged to the heat sink 2. In addition, since the housing portion 3 has the side wall portion 32 formed in a frame shape in plan view, a heat transfer path from the housing portion 3 to the heat sink 2 can be sufficiently secured, and heat dissipation efficiency can be improved. As described above, in the phase modulation module 1, an efficient heat dissipation path can be formed using the cover member 63 and the filling material 7, and the temperature rise can be effectively suppressed. As a result, light resistance of the phase modulation element 6 can be enhanced, and a change in plane shape in the phase modulation element 6 can be suppressed. The filling material 7 functions not only as a heat transfer material but also as a protective material for protecting the phase modulation element 6 from dust, moisture, and the like. In addition, the filling material 7 may be colored, and in this case, the filling material 7 also has a function of blocking stray light incident on the liquid crystal layer 62 from the side surface.

The filling material 7 is in contact with the peripheral edge portion 64 on the side surface 63b of the cover member 63. As a result, a contact area between the filling material 7 and the cover member 63 can be secured, and the heat can be efficiently transferred from the cover member 63 to the housing portion 3.

The filling material 7 is in contact with the peripheral edge portion 64 on the first surface 63c (surface on the side opposite to the heat sink 2) of the cover member 63. As a result, the contact area between the filling material 7 and the cover member 63 can be secured, and the heat can be efficiently transferred from the cover member 63 to the housing portion 3.

The filling material 7 is in contact with the side surface 63b of the cover member 63 over the entire periphery. As a result, the contact area between the filling material 7 and the cover member 63 can be secured, and the heat can be efficiently transferred from the cover member 63 to the housing portion 3. In addition, in the phase modulation module 1, the heat generated in the vicinity of the center of the liquid crystal layer 62 is uniformly transferred toward the side surface 63b of the cover member 63, such that the heat can be efficiently transferred from the cover member 63 to the housing portion 3 by bringing the filling material 7 into contact with the side surface 63b of the cover member 63 over the entire periphery.

The filling material 7 is in contact with the side wall portion 32 of the housing portion 3. As a result, the contact area between the filling material 7 and the housing portion 3 can be secured, and the heat can be efficiently transferred from the cover member 63 to the housing portion 3.

The circuit board 61 is disposed on the heat sink 2 via the first wiring substrate 4. As a result, for example, a fixing strength of the phase modulation element 6 can be increased as compared with a case where the circuit board 61 is directly disposed on the heat sink 2.

The filling material 7 is in contact with the first surface 63c of the cover member 63 (surface on the side opposite to the heat sink 2) and the inner surface 33a of the top wall portion 33. As a result, since the filling material 7 is disposed on the top wall portion 33 side with respect to the phase modulation element 6, the strength of the phase modulation element 6 against an impact from the top wall portion 33 side can be increased. In addition, it is possible to suppress stray light, dust, and the like from entering the arrangement space S of the phase modulation element 6. In addition, since the filling material 7 remains around the opening 34 during manufacturing, it is possible to suppress the filling material 7 from flowing into the effective region RN (region where the incident laser light L can be modulated) in the cover member 63.

In plan view (when viewed from the Z direction), the opening 34 is located inside the outer edge 63a of the cover member 63. As a result, it is possible to suppress the occurrence of damage due to the laser light L incident from the opening 34 being incident on a region other than the effective region RN (for example, the circuit board 61, the first wiring substrate 4, or the like).

On the inner surface 33a of the top wall portion 33, the protruding portion 35 protruding toward the cover member 63 is formed along the edge 34a of the opening 34. As a result, it is possible to reliably suppress the filling material 7 from flowing into the effective region of the cover member 63 during manufacturing.

The filling material 7 is not disposed in the gap G between the protruding portion 35 and the cover member 63. As a result, it is possible to reliably suppress the filling material 7 from flowing into the effective region RN of the cover member 63 during manufacturing. Further, it is possible to suppress the phase modulation element 6 from being damaged by the protruding portion 35 coming into contact with the cover member 63. In the phase modulation module 1, there is a portion where the filling material 7 is not disposed in the arrangement space S of the housing portion 3. As a result, it is possible to reliably suppress the filling material 7 from flowing into the effective region RN of the cover member 63 during manufacturing.

The uneven structure 36 is formed on an inner surface of the housing portion 3, and the filling material 7 is in contact with the uneven structure 36. As a result, the contact area between the filling material 7 and the housing portion 3 can be increased, and heat dissipation performance can be improved.

The bottom wall portion 31 is disposed between the heat sink 2 and the phase modulation element 6. As a result, a path through which heat is transferred from the housing portion 3 to the heat sink 2 can be sufficiently secured, and heat dissipation performance can be improved.

The housing portion 3 is formed of a metal material. As a result, a thermal conductivity of the housing portion 3 can be increased, and the heat transferred from the filling material 7 to the housing portion 3 can be efficiently transferred to the heat sink 2.

The housing portion 3 is formed of a metal material, the circuit board 61 is formed of silicon, and the first wiring substrate 4 is formed of ceramic. As a result, since the ceramic has a linear expansion coefficient between the metal material and silicon, when the first wiring substrate 4 is disposed between the bottom wall portion 31 and the circuit board 61, it is possible to suppress occurrence of warpage in the phase modulation element 6 due to thermal expansion.

A thermal conductivity of the filling material 7 is 0.5 W/(m·K) or more. As a result, the heat of the cover member 63 can be efficiently transferred to the housing portion 3.

In plan view, the shortest distance D between the side surface 63b of the cover member 63 and the side wall portion 32 is smaller than the length LN of the shortest side R of the cover member 63. The filling material 7 is in contact with the side surface 63b of the cover member 63 and the side wall portion 32 at a portion including a position where the distance between the side surface 63b of the cover member 63 and the side wall portion 32 is the shortest distance D. As a result, the distance between the cover member 63 and the side wall portion 32 can be shortened, and the heat of the cover member 63 can be efficiently transferred to the housing portion 3 via the filling material 7.

A thickness of the cover member 63 is 0.5 mm or more. As a result, it is possible to suppress the occurrence of distortion in the cover member 63 due to thermal expansion. In addition, the length (length in the Z direction) of the side surface 63b of the cover member 63 can be secured, and a contact area between the side surface 63b and the filling material 7 can be increased.

The cover member 63 is disposed such that the inclination of the c-axis with respect to the Z direction is 0 degrees or more and 30 degrees or less. Thus, the influence of birefringence in the cover member 63 can be suppressed.

In the phase modulation devices 100A and 100B, the laser light L output from the light source 101 is incident on the cover member 63 such that the angle with respect to the c-axis is 58 degrees or less. In the phase modulation devices 100A and 100B, for the reasons described above, light resistance of the phase modulation element can be enhanced, and a change in plane shape in the phase modulation element can be suppressed. In addition, since the laser light L output from the light source 101 is incident on the cover member 63 such that the angle with respect to the c-axis is 58 degrees or less, the laser light L can be modulated while suppressing the influence of birefringence.

In the phase modulation module 1, the control unit 8 (phase pattern control unit) corrects the phase pattern based on the birefringence correction pattern for correcting the influence of birefringence in the cover member 63. As a result, the influence of birefringence in the cover member 63 can be corrected in the phase modulation module 1.

In the phase modulation module 1, the control unit 8 corrects the phase pattern based on the temperature correction pattern for correcting the influence of shape change of the phase modulation element 6 due to the temperature. As a result, the influence of shape change of the phase modulation element 6 due to the temperature can be corrected in the phase modulation module 1. That is, for example, when the cover member 63 is formed of synthetic quartz, the thermal conductivity of the cover member 63 is low, such that a temperature gradient may occur in the cover member 63. In this case, when the output distribution and the shape of the irradiated laser light L are different, the shape of the phase modulation element 6 is not uniquely determined even when the center temperature is the same. Therefore, it is difficult to correct the influence of shape change of the phase modulation element 6 due to the temperature by the correction pattern. On the other hand, in the phase modulation module 1, since the thermal conductivity of the cover member 63 is high and the generation of the temperature gradient is suppressed, the influence of shape change of the phase modulation element 6 due to the temperature can be corrected by the temperature correction pattern.

The filling material 7 is gel-like or clay-like (putty-like). As a result, for example, when the phase modulation element 6 generates heat and expands during use, the filling material 7 functions as a cushioning material (cushion), such that it is possible to suppress stress from acting on the phase modulation element 6. In addition, even when the orientation of the housing portion 3 is changed during use or manufacturing, the filling material 7 is less likely to move, such that handling can be facilitated.

The method for manufacturing the phase modulation module 1 according to the embodiment includes a preparation step of preparing the structure 15 including the phase modulation element 6, a first arrangement step of disposing the filling material 7 at predetermined positions in the side wall portion 32 and the top wall portion 33 (at least a part of the housing portion 3) of the housing portion 3, and a second arrangement step of disposing the filling material 7 between the phase modulation element 6 and the housing portion 3 by bringing the side wall portion 32 and the top wall portion 33 close to the structure 15. According to this manufacturing method, it is possible to manufacture the phase modulation module 1 capable of enhancing light resistance of the phase modulation element 6 and suppressing a change in plane shape in the phase modulation element 6 as described above.

### [Verification Experiment]

The verification experiment will be described. In this verification experiment, a plurality of samples simulating the phase modulation module 1 were prepared, and the heat dissipation performance was confirmed. In each sample, a heating element made of planar sheet resistance was disposed instead of the liquid crystal layer 62. The heating element was disposed so as to be in contact with the central portion of the cover member 63. The verification was performed by regarding this heating element as the liquid crystal layer 62 that generated heat.

Four samples of the first to fourth samples were used. A first sample S1 corresponds to the phase modulation module 1 of the above embodiment. The first sample S1 corresponds to a configuration in which the cover member 63 is formed of sapphire and the filling material 7 is provided. A second sample S2, a third sample S3, and a fourth sample S4 are comparative examples. The second sample S2 corresponds to a configuration in which the cover member 63 is formed of synthetic quartz and the filling material 7 is not provided. The third sample S3 corresponds to a configuration in which the cover member 63 is formed of sapphire and the filling material 7 is not provided. The fourth sample S4 corresponds to a configuration in which the cover member 63 is formed of synthetic quartz and the filling material 7 is provided.

As a first verification, distribution of heat in the cover member during heat generation of the heating element was confirmed. The heat generation amount of the heating element was set to 7 W. It is estimated that this corresponds to irradiating the liquid crystal layer with laser light of 378 W. As a re sult, in the first sample S1 and the third sample in which the cover member was formed of sapphire, the heat from the heating element transferred to the central portion of the cover member was transferred to the outer edge portion of the cover member, and the heat was uniformly diffused. On the other hand, in the second sample S2 and the fourth sample S4 in which the cover member was formed of synthetic quartz, the heat from the heating element transferred to the central portion of the cover member was not transferred to the outer edge portion of the cover member, and the central portion was locally hot.

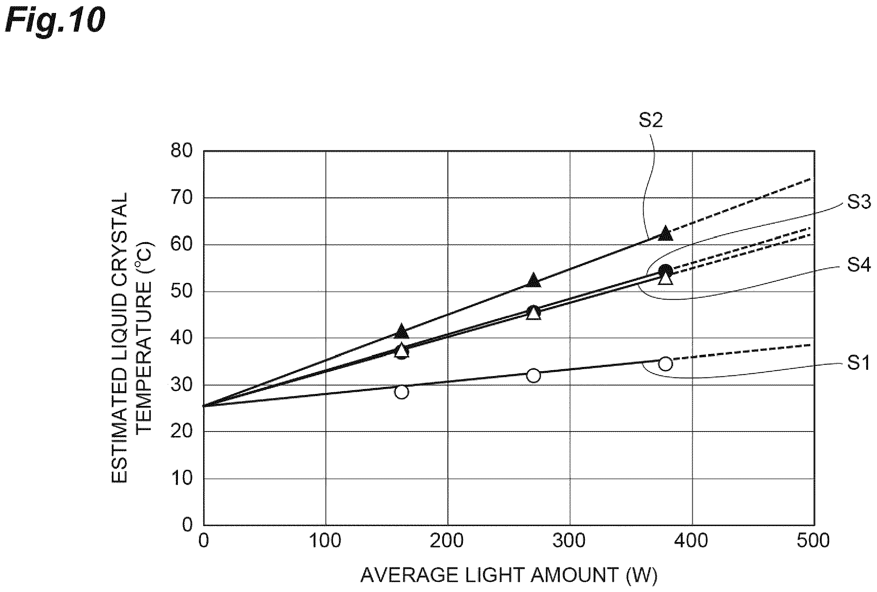

As a second verification, the temperature at the central portion of the cover member 63 during heat generation of the heating element was confirmed (FIG. 10). In the graph of FIG. 10, a horizontal axis represents an average light amount (W), and a vertical axis represents an estimated liquid crystal temperature (°C). The average light amount is a value obtained by converting the heat generation amount of the heating element into an average light amount in a case where the liquid crystal layer is irradiated with the laser light. For an estimated liquid crystal temperature, the temperature at the central portion of the cover member was used as an estimated value of the temperature of the liquid crystal layer.

As illustrated in FIG. 10, comparing the estimated liquid crystal temperatures when the average light amount was 500 W, the estimated liquid crystal temperature of the third sample S3 was lower than that of the second sample S2 by about 10°C. From this, it can be seen that the heat dissipation can be enhanced by forming the cover member 63 with sapphire to increase the thermal conductivity. In the fourth sample S4, the estimated liquid crystal temperature was lower than that of the second sample S2 by about 12°C. From this, it can be seen that heat dissipation can be enhanced by providing the filling material 7. In the first sample S1, the estimated liquid crystal temperature was lower than that of the second sample S2 by about 36°C. The decrease width of 36°C is larger than a sum of the decrease width of 10°C between the second sample S2 and the third sample S3 and the decrease width of 12°C between the second sample S2 and the fourth sample S4. From this, it can be seen that, by forming the cover member 63 with sapphire to increase the thermal conductivity and providing the filling material 7, a synergistic effect of both is generated, and the heat dissipation can be effectively enhanced.

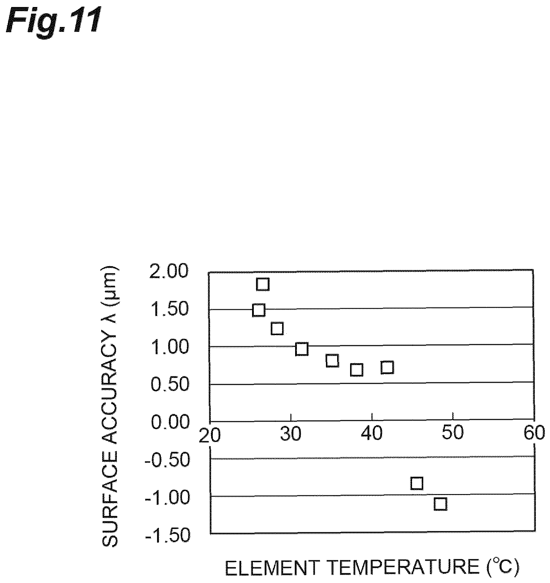

As illustrated in FIG. 10, in the first sample S1 corresponding to the phase modulation module 1 of the above embodiment, the estimated liquid crystal temperature when the average light amount is 500 W is lower than 40°C. Here, with reference to FIG. 11, significance of setting the estimated liquid crystal temperature lower than 40°C will be described. As illustrated in FIG. 11, for example, in a case where the cover member is formed of synthetic quartz, the uneven shape of the surface is reversed when the temperature exceeds 40°C. That is, while a value of a surface accuracy λ (µm) representing an unevenness of a surface of the cover member changes in a positive range in a range lower than 40°C, the surface accuracy λ changes discontinuously and rapidly with 40°C as a boundary, and the surface accuracy λ changes in a negative range in a range higher than 40°C. As described above, in the phase modulation module 1, it is considered significant to set the estimated liquid crystal temperature to be lower than about 40°C. In this respect, as described above, in the first sample S1 corresponding to the phase modulation module 1 of the embodiment, since the estimated liquid crystal temperature when the average light amount is 500 W is lower than 40°C, it is considered that the change in plane shape of the cover member can be suitably suppressed.

### [Modifications]

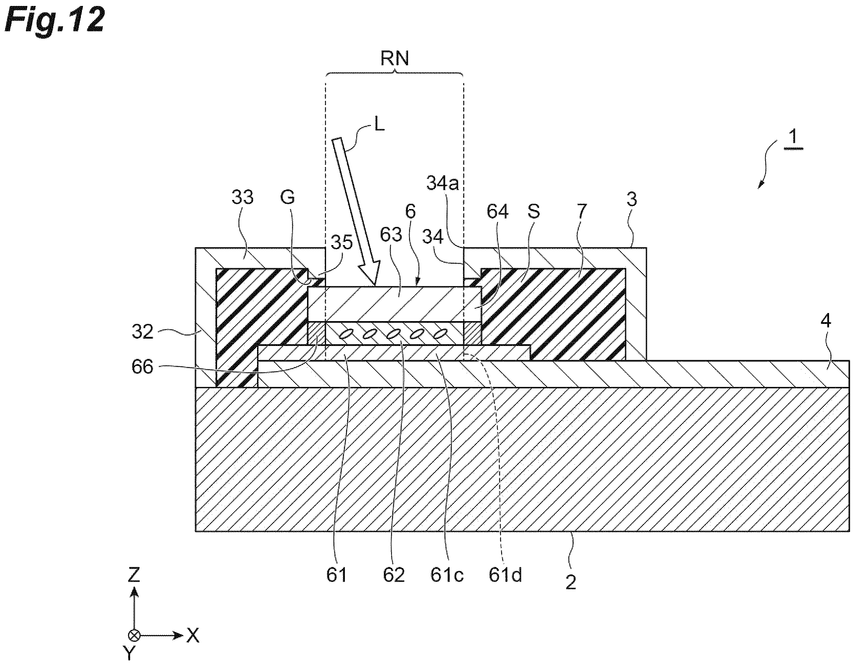

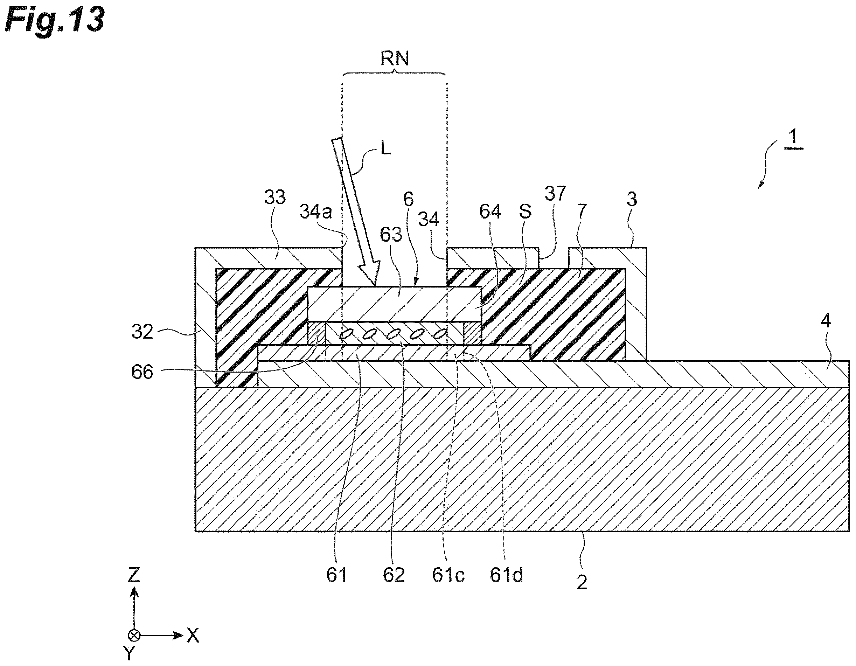

In a first modification illustrated in FIG. 12, the filling material 7 has a portion disposed (entered) in the gap G between the protruding portion 35 of the housing portion 3 and the first surface 63c of the cover member 63. In the first modification, the housing portion 3 does not have the bottom wall portion 31, but has only the side wall portion 32 and the top wall portion 33. The housing portion 3 is not provided with the uneven structure 36. The side wall portion 32 is directly disposed on the heat sink 2 on one side in the X direction (left side in FIG. 12), and is disposed on the heat sink 2 via the first wiring substrate 4 on the other side in the X direction. The first wiring substrate 4 is directly disposed on the heat sink 2. In plan view, a portion of the first wiring substrate 4 on one side in the X direction (left side in FIG. 12) is disposed inside the side wall portion 32 (inside the arrangement space S), and a portion of the first wiring substrate 4 on the other side in the X direction is disposed outside the side wall portion 32 (outside the arrangement space S). The filling material 7 is filled into the entire arrangement space S in the housing portion 3, and is in contact with the entire side wall portion 32 and the entire top wall portion 33. In FIG. 12, the second wiring substrate 5 and the like are not illustrated. The same applies to FIGS. 13 to 19.

In the first modification, the outer edge of the effective pixel region 61c, the inner edge 66a of the sealing resin 66, and the edge 34a of the opening 34 coincide with each other in plan view, and the effective region RN is defined by the outer edge of the effective pixel region 61c, the inner edge 66a of the sealing resin 66, and the edge 34a of the opening 34. That is, also in the first modification, the effective region RN is a region overlapping the effective pixel region 61c in plan view. As described above, the peripheral edge portion 64 of the cover member 63 is a portion of the cover member 63 located outside the effective region RN in plan view.

Also in the first modification, similarly to the above embodiment, the light resistance of the phase modulation element 6 can be enhanced, and the change in plane shape in the phase modulation element 6 can be suppressed. In addition, since the filling material 7 is disposed between the protruding portion 35 and the cover member 63, a contact area between the filling material 7 and the housing portion 3 (top wall portion 33) can be increased, and heat dissipation performance can be improved. Further, it is possible to suppress the phase modulation element 6 from being damaged by the protruding portion 35 coming into contact with the cover member 63.

A second modification illustrated in FIG. 13 is different from the first modification in the following points. In the second modification, the protruding portion 35 is not formed on the top wall portion 33. A through-hole 37 is formed in the top wall portion 33. The through-hole 37 is used to fill the filling material 7 into the housing portion 3. The through-hole 37 is formed in, for example, a circular cross section. That is, in this example, unlike the method for manufacturing the phase modulation module 1 described above, the housing portion 3 is covered on the structure 15 before the filling material 7 is disposed, and then the filling material 7 is filled into the housing portion 3 from the through-hole 37. The phase modulation module 1 can also be manufactured by such a manufacturing method.

In the second modification, an outer edge 61d of the effective pixel region 61c and the inner edge 66a of the sealing resin 66 coincide with each other in plan view, the edge 34a of the opening 34 is located inside the outer edge 61d of the effective pixel region 61c and the inner edge 66a of the sealing resin 66, and the effective region RN is defined by the edge 34a of the opening 34. In the second modification, the effective region RN is a region located inside the edge 34a of the opening 34 in plan view.

Also in the second modification, similarly to the above embodiment, the light resistance of the phase modulation element 6 can be enhanced, and the change in plane shape in the phase modulation element 6 can be suppressed. In addition, since the through-hole 37 for filling the filling material 7 into the housing portion 3 is formed in the top wall portion 33, even when the top wall portion 33 is provided, the filling material 7 can be easily filled into the housing portion 3 during manufacturing. The through-hole 37 may be formed in the side wall portion 32.

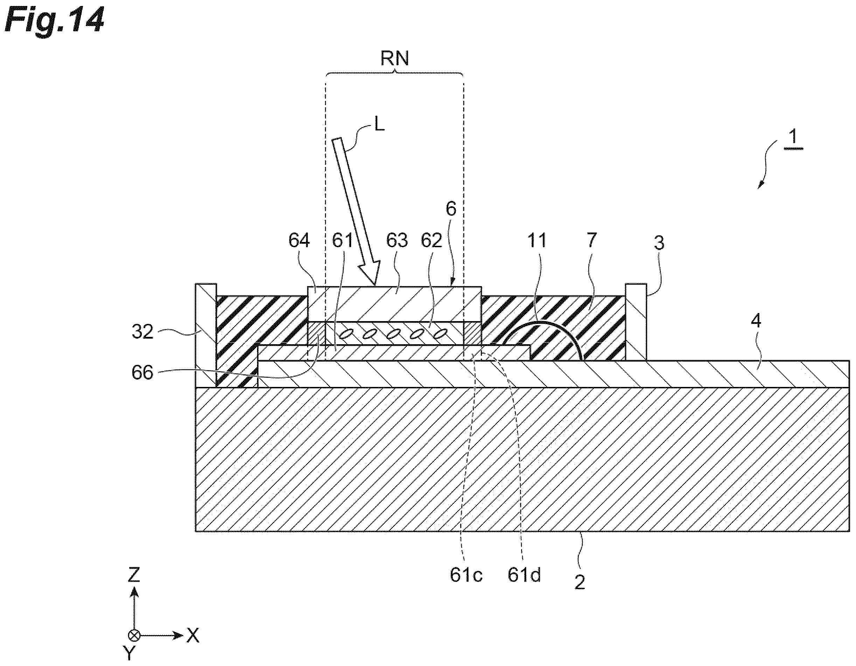

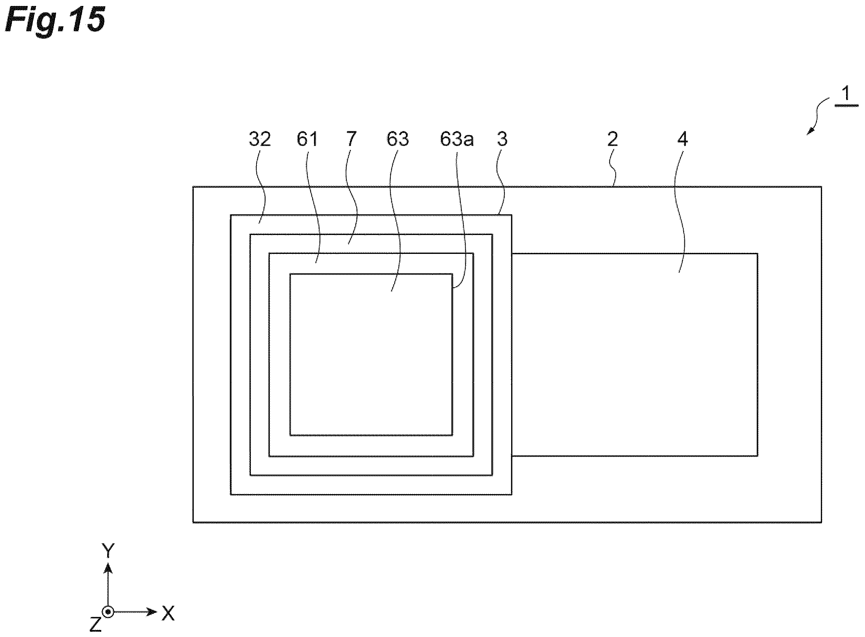

A third modification illustrated in FIGS. 14 and 15 is different from the first modification in the following points. In the third modification, the housing portion 3 does not have the top wall portion 33 but has only the side wall portion 32. The filling material 7 is in contact with the peripheral edge portion 64 only on the side surface 63b of the cover member 63. Also in the third modification, similarly to the above embodiment, the light resistance of the phase modulation element 6 can be enhanced, and the change in plane shape in the phase modulation element 6 can be suppressed.

In the third modification, since the top wall portion 33 is not provided, the opening 34 does not exist, the inner edge 66a of the sealing resin 66 is located inside the outer edge 61d of the effective pixel region 61c in plan view, and the effective region RN is defined by the inner edge 66a of the sealing resin 66. In the third modification, the effective region RN is a region located inside the inner edge 66a of the sealing resin 66 in plan view.

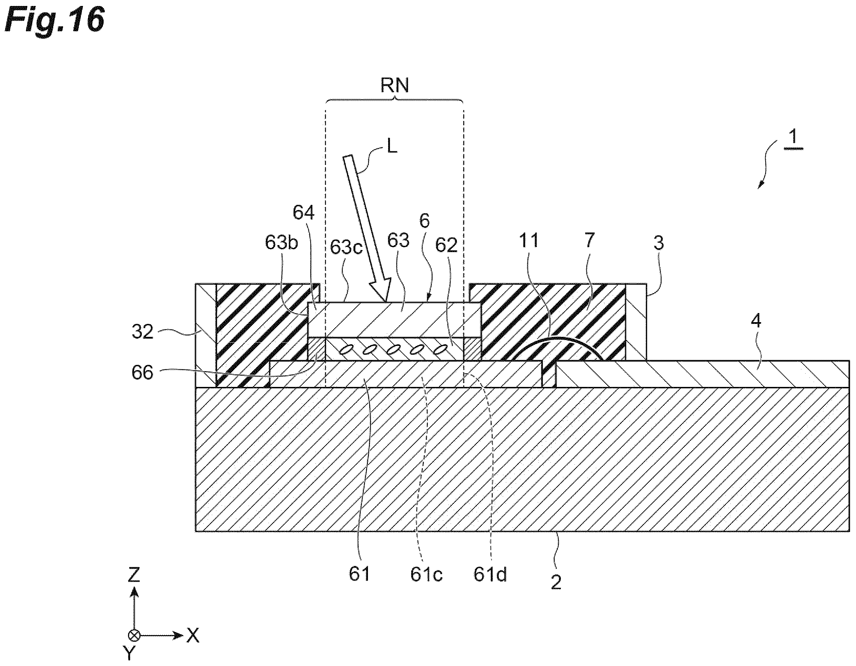

A fourth modification illustrated in FIG. 16 is different from the third modification in the following points. In the fourth modification, the circuit board 61 is directly disposed on the heat sink 2. In this example, the circuit board 61 is disposed on the heat sink 2 via, for example, an adhesive, a double-sided tape, or the like. As described above, "a member A is directly disposed on a member B" includes a case where an element for fixing is disposed between the members A and B (in this case, the circuit board 61 and the heat sink 2). Both the circuit board 61 and the first wiring substrate 4 are directly disposed on the heat sink 2, and the circuit board 61 and the first wiring substrate 4 are disposed in the X direction. The filling material 7 is in contact with not only the side surface 63b of the cover member 63 but also the outer edge portion of the first surface 63c.

Also in the fourth modification, similarly to the above embodiment, the light resistance of the phase modulation element 6 can be enhanced, and the change in plane shape in the phase modulation element 6 can be suppressed. In addition, since the circuit board 61 is directly disposed on the heat sink 2, for example, heat generated by the phase modulation element 6 can be efficiently discharged to the heat sink 2 as compared with the case where the circuit board 61 is disposed on the heat sink 2 via the first wiring substrate 4. In the fourth modification, the outer edge of the effective pixel region 61c and the inner edge 66a of the sealing resin 66 coincide with each other in plan view, and the effective region RN is defined by the outer edge of the effective pixel region 61c and the inner edge 66a of the sealing resin 66.

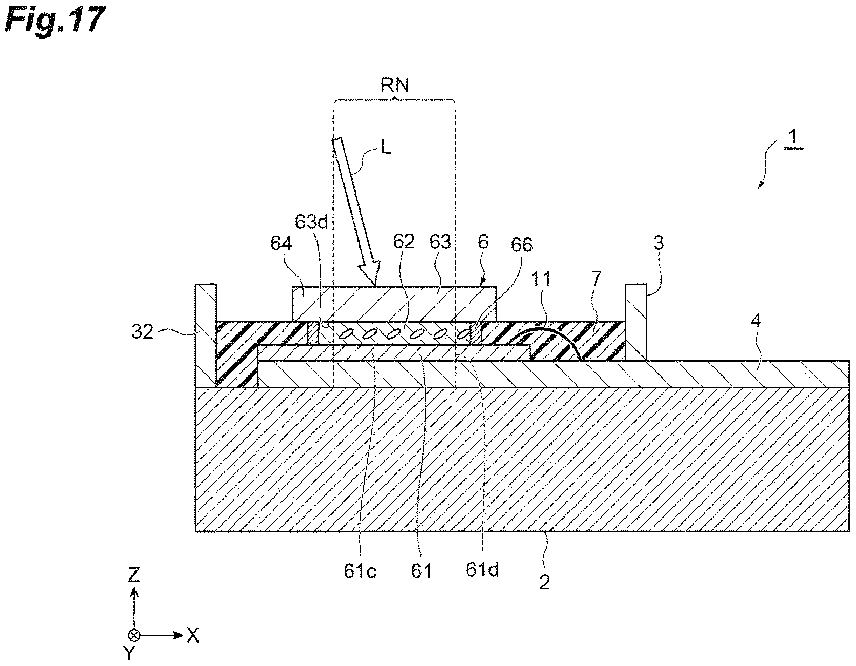

A fifth modification illustrated in FIG. 17 is different from the third modification in the following points. In the fifth modification, the cover member 63 is formed to be larger than the liquid crystal layer 62, and the outer edge portion of the second surface 63d of the cover member 63 is located outside the liquid crystal layer 62. The filling material 7 is in contact with the peripheral edge portion 64 on the second surface 63d. Also in the fifth modification, similarly to the above embodiment, the light resistance of the phase modulation element 6 can be enhanced, and the change in plane shape in the phase modulation element 6 can be suppressed. In the fifth modification, the outer edge of the effective pixel region 61c is located inside the inner edge 66a of the sealing resin 66 in plan view, and the effective region RN is defined by the outer edge of the effective pixel region 61c.

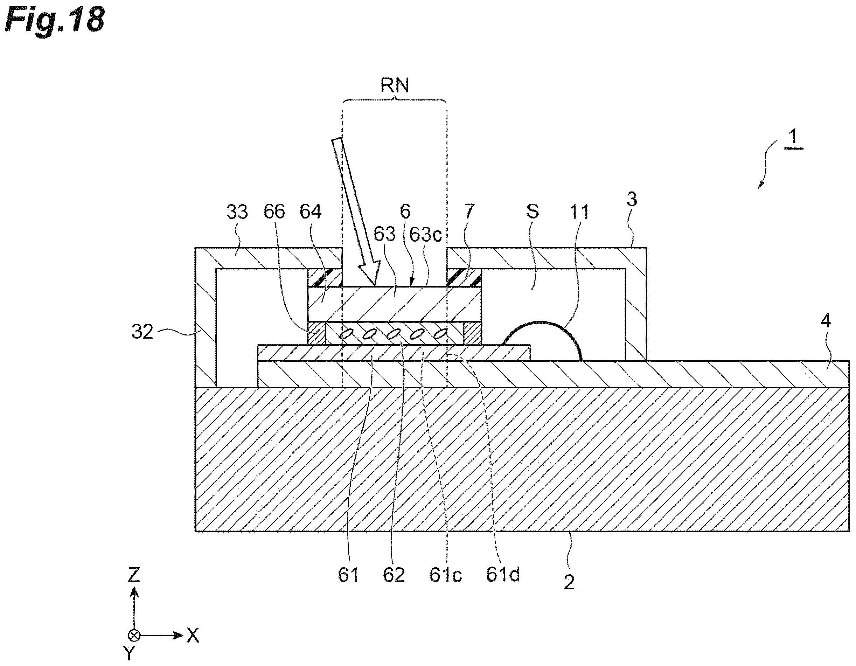

A sixth modification illustrated in FIG. 18 is different from the second modification in the following points. In the sixth modification, the filling material 7 is disposed only between the top wall portion 33 of the housing portion 3 and the first surface 63c of the cover member 63, and is in contact with the top wall portion 33 and the first surface 63c. The filling material 7 is not in contact with the side wall portion 32 of the housing portion 3 and the side surface 63b of the cover member 63. Also in the sixth modification, similarly to the above embodiment, the light resistance of the phase modulation element 6 can be enhanced, and the change in plane shape in the phase modulation element 6 can be suppressed. In the sixth modification, the outer edge of the effective pixel region 61c and the edge 34a of the opening 34 coincide with each other in plan view, and the outer edge of the effective pixel region 61c and the edge 34a of the opening 34 are located inside the inner edge 66a of the sealing resin 66. Therefore, the effective region RN is defined by the outer edge of the effective pixel region 61c and the edge 34a of the opening 34.

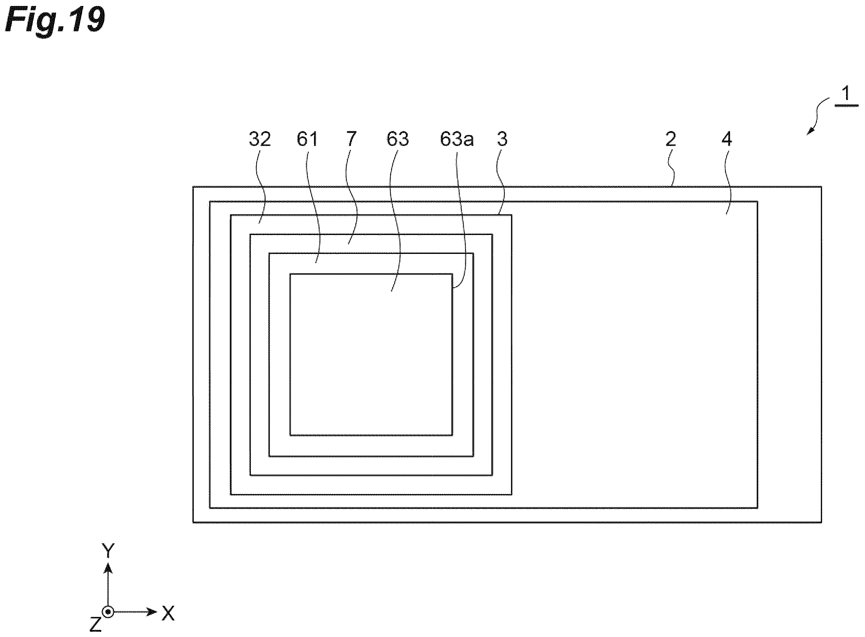

A seventh modification illustrated in FIG. 19 is different from the third modification in the following points. In the seventh modification, the entire side wall portion 32 (housing portion 3) is disposed on the first wiring substrate 4. That is, the entire side wall portion 32 is disposed on the heat sink 2 via the first wiring substrate 4. Also in the seventh modification, similarly to the above embodiment, the light resistance of the phase modulation element 6 can be enhanced, and the change in plane shape in the phase modulation element 6 can be suppressed.

The present disclosure is not limited to the above embodiment and modifications. For example, the material and shape of each configuration are not limited to the material and shape described above, and various materials and shapes can be adopted.

For example, the cover member 63 may be a diamond substrate formed of diamond. Also in this case, the thermal conductivity of the cover member 63 can be increased. The first wiring substrate 4 is not limited to the ceramic substrate, and may be, for example, a flexible circuit board. It is sufficient that the filling material 7 is in contact with at least a part of the surface of the peripheral edge portion 64 of the cover member 63, and may be in contact with, for example, the entire surface of the peripheral edge portion 64 (side surface 63b, first surface 63c, and second surface 63d). It is sufficient that the filling material 7 is in contact with at least a part of the housing portion 3. The filling material 7 does not necessarily have to be in contact with the side surface 63b of the cover member 63 over the entire periphery, and may be in contact with the side surface 63b in a part in the peripheral direction. In the above embodiment, the entire phase modulation element 6 is disposed inside the side wall portion 32 in plan view. However, it is sufficient that at least a part of the phase modulation element 6 is disposed inside the side wall portion 32 in plan view, and a part of the phase modulation element 6 may be disposed outside the side wall portion 32. The first wiring substrate 4 may be omitted. The first wiring substrate 4 may be disposed outside the side wall portion 32 in plan view.

In the above embodiment, the opening 34 is located inside the outer edge 63a of the cover member 63 in plan view, but the opening 34 may have a portion located outside the outer edge 63a in plan view. The uneven structure 36 may be an unevenness formed according to a predetermined pattern, or may be an unevenness having a random (irregular) shape. The phase pattern control unit that controls the phase pattern of the phase modulation element 6 may include a drive circuit formed on the first wiring substrate 4 or the second wiring substrate 5. For example, a plurality of correction patterns may be stored in the drive circuit, and the drive circuit may input a correction pattern selected from the plurality of correction patterns to the circuit board 61.

### Reference Signs List

1: Phase modulation module, 2: Heat sink, 3: Housing portion, 4: First wiring substrate, 6: Phase modulation element, 7: Filling material, 8: Control unit (phase pattern control unit), 15: Structure, 31: Bottom wall portion, 32: Side wall portion, 33: Top wall portion, 33a: Inner surface, 34: Opening, 34a: Edge, 35: Protruding portion, 36: Uneven structure, 37: Through-hole, 61: Circuit board, 62: Liquid crystal layer, 63: Cover member, 63a: Outer edge, 63b: Side surface, 63c: First surface (surface on side opposite to heat sink), 63d: Second surface (surface on heat sink side), 64: Peripheral edge portion, 100A, 100B: Phase modulation device, 101: Light source, D: Shortest distance, G: Gap, L: Laser light

## Claims

1. A phase modulation module comprising:
a heat sink;
a housing portion that has a side wall portion formed in a frame shape when viewed from a predetermined direction, is disposed on the heat sink, and is thermally connected to the heat sink;
a reflection-type phase modulation element at least a part of which is disposed inside the side wall portion when viewed from the predetermined direction; and
a filling material disposed inside the side wall portion when viewed from the predetermined direction, wherein
the phase modulation element includes:
a circuit board disposed on the heat sink,
a liquid crystal layer disposed on a side opposite to the heat sink with respect to the circuit board, and
a cover member formed of sapphire or diamond in a plate shape and disposed on a side opposite to the heat sink with respect to the liquid crystal layer, and
the filling material is in contact with at least a part of a peripheral edge portion of the cover member and the housing portion.

2. The phase modulation module according to claim 1, wherein the filling material is in contact with the peripheral edge portion on a side surface of the cover member.

3. The phase modulation module according to claim 1 or 2, wherein the filling material is in contact with the peripheral edge portion on a surface of the cover member on a side opposite to the heat sink.

4. The phase modulation module according to any one of claims 1 to 3, wherein the filling material is in contact with the peripheral edge portion on a surface of the cover member on the heat sink side.

5. The phase modulation module according to any one of claims 1 to 4, wherein the filling material is in contact with a side surface of the cover member over an entire periphery.

6. The phase modulation module according to any one of claims 1 to 5, wherein the filling material is in contact with the side wall portion of the housing portion.

7. The phase modulation module according to any one of claims 1 to 6, further comprising:
a wiring substrate disposed on the heat sink such that at least a part of the wiring substrate is located inside the side wall portion when viewed from the predetermined direction, wherein
the circuit board is disposed on the heat sink via the wiring substrate.

8. The phase modulation module according to any one of claims 1 to 6, wherein the circuit board is directly disposed on the heat sink.

9. The phase modulation module according to any one of claims 1 to 6, wherein
the housing portion includes a top wall portion connected to the side wall portion,
an opening that overlaps at least a part of the phase modulation element when viewed from the predetermined direction is formed in the top wall portion, and
the filling material is in contact with a surface of the cover member on a side opposite to the heat sink and an inner surface of the top wall portion.

10. The phase modulation module according to claim 9, wherein a through-hole for filling the filling material into the housing portion is formed in the side wall portion or the top wall portion.

11. The phase modulation module according to claim 9 or 10, wherein the opening is located inside an outer edge of the cover member when viewed from the predetermined direction.

12. The phase modulation module according to any one of claims 1 to 11, wherein
the housing portion includes a top wall portion connected to the side wall portion,
an opening that overlaps at least a part of the phase modulation element when viewed from the predetermined direction is formed in the top wall portion, and
a protruding portion protruding toward the cover member is formed on an inner surface of the top wall portion along an edge of the opening.

13. The phase modulation module according to claim 12, wherein a gap is formed between the protruding portion and the cover member, and the filling material is not disposed in the gap.

14. The phase modulation module according to claim 12, wherein the filling material is disposed between the protruding portion and the cover member.

15. The phase modulation module according to any one of claims 1 to 14, wherein
an uneven structure is formed on an inner surface of the housing portion, and
the filling material is in contact with the uneven structure.

16. The phase modulation module according to any one of claims 1 to 7 and 9 to 15, wherein
the housing portion includes a bottom wall portion connected to the side wall portion, and
the bottom wall portion is disposed between the heat sink and the phase modulation element.

17. The phase modulation module according to any one of claims 1 to 16, wherein the housing portion is formed of a metal material.

18. The phase modulation module according to claim 16, further comprising:
a wiring substrate disposed on the heat sink such that at least a part of the wiring substrate is located inside the side wall portion when viewed from the predetermined direction, wherein
the circuit board is disposed on the heat sink via the wiring substrate, and
the housing portion is formed of a metal material, the circuit board is formed of silicon, and the wiring substrate is formed of ceramic.

19. The phase modulation module according to any one of claims 1 to 18, wherein a thermal conductivity of the filling material is 0.5 W/(m·K) or more.

20. The phase modulation module according to any one of claims 1 to 19, wherein
the cover member is formed in a rectangular plate shape,
a shortest distance between a side surface of the cover member and the side wall portion is smaller than a length of a shortest side of the cover member when viewed from the predetermined direction, and
the filling material is in contact with the side surface of the cover member and the side wall portion at a portion including a position where a distance between the side surface of the cover member and the side wall portion is the shortest distance.

21. The phase modulation module according to any one of claims 1 to 20, wherein a thickness of the cover member is 0.5 mm or more.

22. The phase modulation module according to any one of claims 1 to 21, wherein the cover member is formed of sapphire, and is disposed such that an inclination of a c-axis with respect to the predetermined direction is 0 degrees or more and 30 degrees or less.

23. A phase modulation device comprising:
the phase modulation module according to claim 22; and
a light source configured to output laser light, wherein
the laser light output from the light source is incident on the cover member such that an angle with respect to the c-axis is 58 degrees or less.

24. The phase modulation module according to any one of claims 1 to 22, further comprising:
a phase pattern control unit configured to control a phase pattern, the phase pattern control unit causing the phase modulation element to modulate a phase of incident light according to the phase pattern, wherein
the phase pattern control unit corrects the phase pattern based on a correction pattern for correcting an influence of birefringence in the cover member.

25. The phase modulation module according to any one of claims 1 to 22 and 24, further comprising:
a phase pattern control unit configured to control a phase pattern, the phase pattern control unit causing the phase modulation element to modulate a phase of incident light according to the phase pattern, wherein
the phase pattern control unit corrects the phase pattern based on a correction pattern for correcting an influence of shape change of the phase modulation element due to a temperature.

26. The phase modulation module according to any one of claims 1 to 22, 24, and 25, wherein the filling material is gel-like or clay-like.

27. A method for manufacturing the phase modulation module according to any one of claims 1 to 22 and 24 to 26, the method comprising:
a step of preparing a structure including the phase modulation element;
a step of disposing the filling material at a predetermined position in at least a part of the housing portion; and
a step of disposing the filling material between the phase modulation element and the housing portion by bringing at least the part of the housing portion close to the structure.
